(19) Europäisches Patentamt European Patent Office Office européen des brevets

(11) **EP 2 534 773 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(21) Anmeldenummer: **11725358.3**

(22) Anmeldetag: **17.05.2011**

(51) Int Cl.:
***H04B 10/116*** *(2013.01)*

(86) Internationale Anmeldenummer:
**PCT/EP2011/057961**

(87) Internationale Veröffentlichungsnummer:
**WO 2011/144607 (24.11.2011 Gazette 2011/47)**

(54) **VERFAHREN UND ANORDNUNG ZUR STABILISIERUNG EINES FARBKODIERUNGSVERFAHRENS BEI EINER OPTISCHEN ÜBERTRAGUNG VON DATEN**

METHOD AND ARRANGEMENT FOR STABILIZING A COLOUR CODING METHOD FOR OPTICAL TRANSMISSION OF DATA

PROCÉDÉ ET SYSTÈME POUR STABILISER UN PROCÉDÉ DE CODAGE CHROMATIQUE LORS D'UNE TRANSMISSION OPTIQUE DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2010 EP 10005131
17.05.2010 EP 10005134**

(43) Veröffentlichungstag der Anmeldung:
**19.12.2012 Patentblatt 2012/51**

(73) Patentinhaber: **Siemens Aktiengesellschaft
80333 München (DE)**

(72) Erfinder: **WALEWSKI, Joachim
82008 Unterhaching (DE)**

(56) Entgegenhaltungen:
**EP-A1- 2 136 484 US-A- 6 014 236**

**Beschreibung**

Die Erfindung betrifft ein Verfahren und eine Anordnung zur Stabilisierung eines Farbkodierungsverfahrens bei einer optischen Datenübertragung.

Aus dem Stand der Technik ist eine Datenübertragung mittels sichtbaren Lichts (»Visible-Light Communications«, VLC) bekannt, welche beispielsweise in Ergänzung zu herkömmlichen Funktechnik eingesetzt werden kann. Daten lassen sich dabei beispielsweise über lichtemittierende Dioden (LED) übertragen. Ein zu übertragender Datenstrom wird dabei beispielsweise in Form von für Menschen nicht wahrnehmbaren Modulationen übertragen.

Weiterhin ist ein jüngeres Kodierungsverfahren für sichtbares Licht bekannt, das auf einer Farbkodierung mit Elementarfarben beruht. Auf ein solches Verfahren wird in der Fachwelt auch unter dem Begriff CSK (»Color Shift Keying«) Bezug genommen. Weitere ältere Bezeichnungen für dieses Kodierungsverfahren sind CCM (»Color Code Modulation«) oder CMC (»Color Multiplex Coding«).

Das Funktionsprinzip von VLC unter Anwendung dieses Farbkodierungsverfahrens besteht grob gesagt darin, eine aus mehrere Elementarfarben gemischte Beleuchtung zur zusätzlichen Übertragung von Daten zu verwenden, wobei die jeweiligen Elementarfarben derart rasch moduliert werden, dass für das menschliche Auge in der Summe eine kontinuierliche Mischfarbe erkannt wird. Üblichweiße werden hierzu die drei Elementarfarben rot, grün und blau verwendet, welche in technisch ausgereifter Weise durch entsprechende Leuchtdioden emittierbar sind.

Eine ausführliche Beschreibung von CSK findet sich im Änderungsvorschlag zum Standard IEEE P802.15.7, Yokoi et al.: »Modified Text clause 6.9.2.2«, 17. Januar 2010, Dokumentidentifizierung »15-10-0036-00-0007«. Eine der für CSK vorgeschlagenen Anwendungen ist VLC, also eine Freiraumkommunikation mit Licht.

In besagten Änderungsvorschlag wird eine empfängerseitige Kompensation von Änderungen der optischen Leistung der senderseitig vorgesehenen Elementarfarben-Leuchtdioden beschrieben. Eine Kompensation der der senderseitig ausgesandten Strahlung ist gemäß diesem Änderungsvorschlag aufgrund der lediglich empfängerseitigen Kompensation nicht vorgesehen.

Aus der Druckschrift EP 2136484 A1 geht ein Verfahren zur Stabilisierung einer Farbkodierung auf Basis einer Mehrzahl von Elementarfarben hervor, bei dem von einem Sender eine Kalibrierungsnachricht gebildet wird, durch welche mindestens einer der jeweiligen Elementarfarbe zugeordneten optischen Strahlungsquelle mit einem Wert einer zu sendenden optischen Leistung eingestellt wird. Diese Kalibrierungsnachricht wird im Empfänger empfangen und ein jeweiliger Wert einer am jeweiligen optischen Strahlungsempfänger empfangenen optischen Leistung ermittelt.

Ein Verfahren zur senderseitigen Kompensation wurde von der Anmelderin in einer am 05.11.2010 eingereichten internationalen Patentanmeldung mit dem Anmeldezeichen PCT/EP2010/066907 und dem Titel »Verfahren und Anordnung zur Stabilisierung eines Farbkodierungsverfahrens bei einer optischen Übertragung von Daten« vorgeschlagen. Im genannten Verfahren ist vorgesehen, dass vom Sender eine Kalibrierungsnachricht an den Empfänger gesandt wird. Im Empfänger wird durch Vergleich einer aus der empfangenen Kalibrierungsnachricht abgeleiteten Kanaleigenschaft mit einer zuvor im Empfänger gespeicherten Kanaleigenschaft eine Kompensationsinformation ermittelt. Diese Kompensationsinformation wird an den Sender gesendet, in dem auf Basis der ermittelten Kompensationsinformation eine Anpassung mindestens eines Sendeparameters vorgenommen wird.

Das vorgeschlagene Verfahren ermöglicht zwar die senderseitige Kompensation der optischen Leistung, hat indes den Nachteil, dass zu seiner Implementierung umfangreiche Änderungen im Protokoll ausgetauschter Steuernachrichten notwendig sind. Beispielsweise ist eine zusätzliche Steuernachricht zur Übermittlung der Kompensationsinformation erforderlich, welche im Protokoll bislang nicht vorgesehen ist. Ein weiterer Nachteil des vorgeschlagenen Verfahrens besteht darin, dass eine Speicherung von Kanaleigenschaften und eine Berechnung der Kompensationsinformation auf Basis einer gespeicherten Kanaleigenschaften im Empfänger erfolgt, welche zusätzliche Anforderungen an die Ressourcen des Empfängers stellen.

Aufgabe der Erfindung ist es, Mittel zur senderseitigen Kompensation des Spektrums der ausgesendeten optischen Strahlung vorzusehen, welche geringere Anforderungen an die zur Implementierung der Kompensationsmittel notwendigen Änderungen stellen.

Eine Lösung der Aufgabe erfolgt durch ein Verfahren mit den Merkmalen des Patentanspruchs 1 sowie durch ein optisches Übertragungssystem mit den Merkmalen des Patentanspruchs 9.

Die Erfindung sieht ein Verfahren zur Stabilisierung einer Farbkodierung bei einer optischen Übertragung von Daten zwischen einem Sender und einem Empfänger vor, bei dem zur Kodierung und Übertragung der Daten ein Farbkodierungsverfahren auf Basis einer Mehrzahl von Elementarfarben vorgesehen ist, bei dem eine jeweilige Elementarfarbe durch mindestens eine jeweilige senderseitige optische Strahlungsquelle gesendet wird und empfängerseitig von einem jeweiligen optischen Strahlungsempfänger empfangen wird.

Eine vom Sender gebildete Kalibrierungsnachricht umfasst mindestens eine Zeitsequenz, innerhalb der mindestens eine einer Elementarfarbe zugeordnete optische Strahlungsquelle mit einem Wert einer zu sendenden optischen Leistung eingestellt wird. Durch diese Kalibrierungsnachricht werden also mit anderen Worten die für die jeweilige Elementarfarbe vorgesehenen Strahlungsquellen in einer definierten Weise angesteuert, so dass eine anschließende Ermittlung einer Beziehung zwischen der von den jeweiligen Strahlungsquellen gesendeten optischen Leistung und der an den jeweiligen Strahlungsempfängern empfangenen optischen Leistung möglich ist. Die Kalibrierungsnachricht wird am Empfänger empfangen; anschließend wird ein jeweiliger Wert einer am jeweiligen optischen Strahlungsempfänger empfangenen optischen Leistung ermittelt. Die jeweiligen Werte der am jeweiligen optischen Strahlungsempfänger empfangenen optischen Leistung werden daraufhin an den Sender übermittelt.

Erfindungsgemäß wird im Sender der jeweilige Wert der am jeweiligen optischen Strahlungsempfänger empfangenen optischen Leistung in Beziehung gesetzt zum jeweiligen Wert der an der jeweiligen optischen Strahlungsquelle gesendeten optischen Leistung. Aufgrund der Beziehung wird eine Kompensationsinformation ermittelt, wobei auf Basis der Kompensationsinformation eine senderseitige Anpassung mindestens eines Sendeparameters vorgenommen wird.

Die Begriffe »Sender« und »Empfänger« sind dahingehend zu verstehen, dass der »Sender« neben seiner Eigenschaft, in einem Duplexbetrieb sowohl Daten zu senden als auch zu empfangen, gleichzeitig als Lichtquelle fungiert, während der »Empfänger« zwar Daten in einem Duplexbetrieb senden und empfangen vermag, jedoch nicht notwendigerweise als Lichtquelle betrieben wird. Ein Betrieb des Senders als Lichtquelle umfasst eine beispielhafte Ausführungsform als Raumbeleuchtung oder auch als Anzeigentafel.

Der Begriff »jeweiliger optischer Strahlungsempfänger« umfasst fallweise einen oder mehrere Strahlungsempfänger, welche für einen Empfang einer oder mehrerer Elementarfarben vorgesehen sind. Entsprechendes gilt für die jeweilige optische Strahlungsquelle.

Die Erfindung ermöglicht in vorteilhafter Weise eine senderseitige Kompensation der Mischfarbe der ausgesendeten optischen Strahlung, welche sich beispielsweise durch eine Intensitätsdrift einer einzelnen Elementarfarbe verändert hat.

Ein wesentlicher Vorteil der Erfindung ist darin zu sehen, dass unter Anwendung der erfindungsgemäßen Mittel nur geringfügige Änderungen im Protokoll vorzunehmen sind. Bei der empfängerseitigen Protokollabarbeitung sind lediglich eine Ermittlung der für eine jeweilige Elementarfarbe vorgesehenen optischen Leistung sowie eine Übertragung des jeweiligen Werts der optischen Leistung über einen Rückkanal zum Sender vorgesehen. Die erstgenannte Ermittlung erfordert keine Änderung in den ohnehin zum Empfang und zur Ermittlung von Werten der optischen Leistung vorgesehenen Abläufen. Die zweitgenannte Rückübertragung des jeweiligen Werts der optischen Leistung beschränkt sich vorteilhaft auf ein »Relaying« -Verfahren, bei dem die bloße Rückgabe empfangener Werte mit wenig protokollarischem Aufwand verbunden ist. Insbesondere vorteilhaft ist die Entbindung des Empfängers von aus dem Stand der Technik bekannten Maßnahmen, welche eine Vorhaltung von Daten und eine Berechnung einer Kompensationsinformation aus den vorgehaltenen und aktuell gemessenen Daten erforderlich machten. Der Implementierungs- und Berechnungsaufwand wird nunmehr auf den Sender verlagert, was dahingehend von Vorteil ist, als dem Sender ohnehin eine zentralere Rolle in der Kompensation zugeordnet wird.

Vorteilhafte Ausgestaltungen und Weiterbildungen der Erfindung sind Gegenstand der abhängigen Ansprüche.

Eine vorteilhafte Ausgestaltung betrifft eine Assoziation zwischen dem Sender und dem Empfänger. Die Erfindung sowie die Ausgestaltungen der Erfindung führen zu einer verbesserten Bandbreiteneffizienz gegenüber dem bislang bekannten Verfahren einer vom Sender und den Empfänger gesendeten Kalibrierungsnachricht. Diese verbesserte Bandbreiteneffizienz ist darauf zurückzuführen, dass nur einmal, während einer Assoziation, Konfigurationsbotschaften ausgetauscht werden müssen, und dass darauf folgende Bestimmungen der am jeweiligen optischen Strahlungsempfänger empfangenen optischen Leistung nur dann vorgenommen werden, wenn sogenannte Kalibrierungsnachricht bzw. »Visibility Frames« vom Sender ausgestrahlt werden. Visibility Frames werden z.B. dann gesendet, wenn aktuell keine anderweitigen zu übertragen sind. Die erfindungsgemäße Farbstabilisierung konkurriert deshalb grundsätzlich nicht mit dem Datenverkehr, wie dies bei genannten vorhergehenden Verfahren der Fall war.

Ein Ausführungsbeispiel mit weiteren Vorteilen und Ausgestaltungen der Erfindung wird im Folgenden anhand der Zeichnung näher erläutert.

Dabei zeigen:

Fig. 1:    ein Strukturbild zur schematischen Darstellung eines optischen Übertragungssystems;

Fig. 2:    ein Strukturbild zur schematischen Darstellung einer erfindungsgemäßen Regelschleife;

Fig. 3:    eine zweidimensionale CIE-Normfarbtafel mit einer aus vier Punkten definierten Farbzuordnung in einer ersten Darstellung;

Fig. 4:    eine zweidimensionale CIE-Normfarbtafel mit einer aus vier Punkten definierten Farbzuordnung in einer zweiten Darstellung;

Fig. 5:    eine zweidimensionale CIE-Normfarbtafel mit einer aus acht Punkten definierten Farbzuordnung;

Fig. 6:   eine zweidimensionale CIE-Normfarbtafel mit einer aus 16 Punkten definierten Farbzuordnung;

Fig. 7:   ein Wechselstromverhalten einer optischen Strahlungsleistung einer Strahlungsquelle in Abhängigkeit von einem zugeführten Treiberstrom;

Fig. 8:   ein Gleichstromverhalten einer optischen Strahlungsleistung einer Strahlungsquelle in Abhängigkeit von einem zugeführten Treiberstrom;

Fig. 9:   ein Strukturbild zur schematischen Darstellung eines optischen Übertragungssystems gemäß einer Ausführungsvariante der Erfindung;

Fig. 10:   ein Strukturbild zur Darstellung einer zeitlichen Sequenz von Symbolen innerhalb einer beispielhaften Kalibrierungsnachricht; und;

Fig. 11   ein Strukturbild zur Darstellung einer zeitlichen Abfolge ausgetauschter Nachrichten bei einer Assoziation eines Netzknotens zu einem Koordinator auf Basis einer optischen Übertragung von Daten.

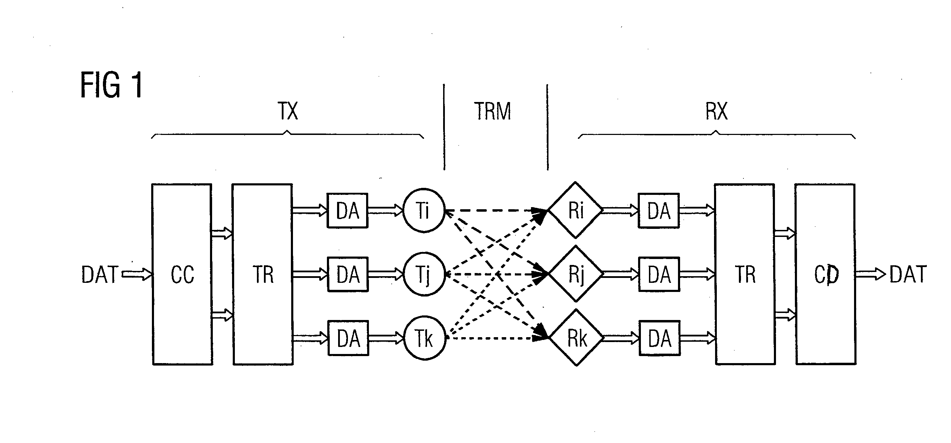

Figur 1 zeigt ein auf einem CSK (»Color Shift Keying«) basierendes optisches Datenübertragungssystem für sichtbares Licht, beispielsweise ein VLC-System (»Visible-Light Communication«).

Das Datenübertragungssystem besteht im Wesentlichen aus einem Sender TX, einer Übertragungsstrecke TRM sowie einem Empfänger RX. Das Übertragungssystem arbeitet in einem Duplexbetrieb bei dem der Sender TX sowohl Daten senden als auch empfangen kann. Entsprechendes gilt für den Empfänger RX.

Das CSK-Verfahren basiert auf eine Farbkodierung mit einer Mehrzahl von Elementarfarben, beispielsweise rot, grün und blau. Eine ausführliche Beschreibung von CSK findet sich im Änderungsvorschlag zum Standard IEEE P802.15.7, Yokoi et al.: »Modified Text clause 6.9.2.2«, 17. Januar 2010, Dokumentidentifizierung »15-10-0036-00-0007«.

In Figur 1 sind aus Vereinfachungsgründen seitens des Senders TX lediglich die zum Senden notwendigen Funktionseinheiten sowie seitens des Empfängers RX die zum Empfangen notwendigen Funktionseinheiten dargestellt.

Anhand von Figur 1 wird eine Übertragungsfunktion eines CSK - Systems betrachtet. In allgemeiner Schreibweise bezeichnet $A$ im Folgenden eine Matrix und $a$ einen Spaltenvektor.

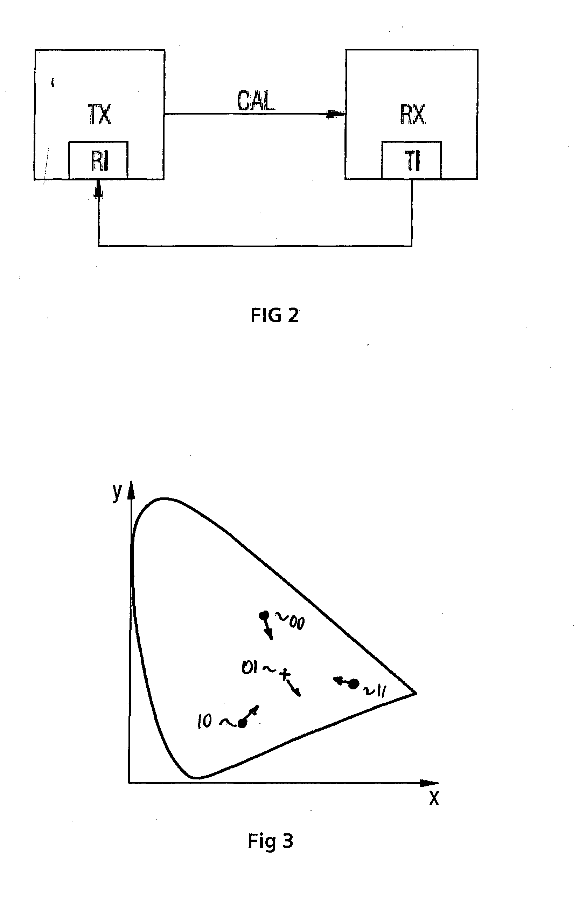

Auf Senderseite TX werden digitale Daten DAT zunächst einem Farbkodierer CC zugeführt. Die Daten DAT werden im Farbkodierer entsprechend einer Mappingregel in XY-Werte umgewandelt. Diese XY-Werte entsprechen Werte in einem XY-Farbkoordinatensystem gemäß der später zu beschreibenden Figur 3.

Am Ausgang des Farbkodierers CC werden diese zweidimensionalen Daten - in der Zeichnung durch zwei Pfeile symbolisiert - einem Transformer TR zugeführt, an dessen Ausgang drei digitale Signalintensitätswerte für ein Signal jeweils einer von drei Elementarfarben zur Verfügung gestellt werden. Die drei digitalen Signalintensitätswerte für die jeweiligen Elementarfarbenindizes i,j,k werden in einem Signalintensitätsvektor beschrieben:

$$\boldsymbol{s}_{Tx}^{(b)} := \begin{pmatrix} S_{Tx,i}^{(b)} \\ S_{Tx,j}^{(b)} \\ S_{Tx,k}^{(b)} \end{pmatrix}$$

Hier und im Folgenden steht der gemeinsame Index Tx für eine senderseitige Größe. Der hochgestellte Kenner (b) steht für einen Binärwert eines entsprechenden Signalintensitätswerts.

Ein jeweiliger digitaler Signalintensitätswert wird einem Konverter DA zugeführt, in welchem die digitalen Signalintensitätswerte in analoge Signalgrößen gewandelt werden. Die drei analogen Signalgrößen werden als jeweilige elektrische Stromgrößen für die jeweiligen Elementarfarbenindizes i,j,k in einem Stromstärkevektor beschrieben:

$$\boldsymbol{i}_{Tx} := \begin{pmatrix} i_{Tx,i} \\ i_{Tx,j} \\ i_{Tx,k} \end{pmatrix}$$

Diese analogen Signalgrößen werden einer jeweils zugehörigen optischen Strahlungsquelle Ti,Tj,Tk, also einer ersten optischen Strahlungsquelle Ti, einer zweiten optischen Strahlungsquelle Tj, und einer dritten optischen Strahlungsquelle Tk zugeführt.

Gemäß einem bevorzugten Ausführungsbeispiel der Erfindung entspricht die erste optische Strahlungsquelle Ti einer roten Leuchtdiode, die zweite optische Strahlungsquelle Tj einer grünen Leuchtdiode sowie die dritte optische Strahlungsquelle Tk einer blauen Leuchtdiode.

Die so von der jeweiligen Strahlungsquelle Ti,Tj,Tk gesendete optische Strahlung wird über eine Übertragungsstrecke TRM in Richtung des Empfängers RX geführt.

Die von der jeweiligen Strahlungsquelle Ti,Tj,Tk abgestrahlten optischen Leistungskomponenten werden in einem Vektor der gesendeten optischen Leistung beschrieben:

$$\boldsymbol{p}_{Tx} := \begin{pmatrix} p_{Tx,i} \\ p_{Tx,j} \\ p_{Tx,k} \end{pmatrix}.$$

Auf Seiten des Empfängers RX trifft die gesendete optische Strahlung auf einem auf eine jeweilige Elementarfarbe eingestellten Strahlungsempfänger Ri,Rj,Rk, nämlich einem ersten optischen Strahlungsempfänger Ri, einem zweiten optischen Strahlungsempfänger Rj sowie einem dritten optischen Strahlungsempfänger Rk.

Die am jeweiligen Strahlungsempfänger Ri,Rj,Rk eintreffenden optischen Leistungskomponenten werden in einem Vektor der empfangenen optischen Leistung beschrieben:

$$\boldsymbol{p}_{Rx} := \begin{pmatrix} p_{Rx,i} \\ p_{Rx,j} \\ p_{Rx,k} \end{pmatrix}$$

Hier und im Folgenden steht der gemeinsame Index Rx für eine empfängerseitige Größe.

In einer analogen, zum Sender TX entgegenlaufenden Weise wird im Empfänger RX das jeweilige optische Signal durch die optischen Strahlungsempfänger Ri,Rj,Rk in analoge Signale umgewandelt. Die drei analogen Signalgrößen werden als jeweilige elektrische Stromgrößen für die jeweiligen Elementarfarbenindizes i,j,k in einem Stromstärkevektor beschrieben:

$$\boldsymbol{i}_{Rx} := \begin{pmatrix} i_{Rx,i} \\ i_{Rx,j} \\ i_{Rx,k} \end{pmatrix}$$

Das elektrische analoge Signal wird einem jeweiligen Konverter DA zugeführt wird, in welchem eine jeweilige Umsetzung der jeweiligen analogen Signalgrößen in einen jeweiligen digitalen Signalintensitätswert erfolgt. Die drei Signalintensitätswerte für die jeweiligen Elementarfarbenindizes i,j,k werden in einem Signalintensitätsvektor beschrieben:

$$\boldsymbol{s}_{Rx}^{(b)} := \begin{pmatrix} s_{Rx,i}^{(b)} \\ s_{Rx,j}^{(b)} \\ s_{Rx,k}^{(b)} \end{pmatrix}$$

Die an den drei jeweiligen Konvertern DA abgegriffenen digitalen Signalintensitätswerte werden einem Transformer TR zugeführt, welcher in einer zum Sender TX entgegengesetzten Weise eine Umsetzung des Wertetripels in ein Wertedupel vornimmt, welches wiederum einem Farbdekodierer CD zugeführt wird, an dessen Ausgang schließlich Daten DAT entnommen werden, welche in einer korrekten Betriebsart identisch mit den dem Sender TX zugeführten Daten DAT sind.

Im Folgenden wird ein rechnerischer Zusammenhang einzelner Größen dargestellt.

Gemäß

$$P_{Rx} = Tp_{Tx}$$

wird ein Zusammenhang zwischen der empfangenen und der gesendeten optischen Leistung durch Multiplikation der gesendeten optischen Leistung mit einer Transmittanzmatrix $T$ beschrieben. Die Transmittanzmatrix $T$ beschreibt die optische Transmittanz von einem jeweiligen Elementarfarben-Strahlungsquellen Ti,Tj,Tk zu einem für eine jeweils andere Elementarfarbe vorgesehenen Strahlungsempfänger Ri,Rj,Rk. Die Koeffizienten der Transmittanzmatrix $T$ werden wie folgt dargestellt:

$$T := \begin{pmatrix} t_{ii} & t_{ij} & t_{ik} \\ t_{ji} & t_{jj} & t_{jk} \\ t_{ki} & t_{kj} & t_{kk} \end{pmatrix}$$

Mit anderen Worten beschreibt die Transmittanzmatrix $T$ die Ausbreitungscharakteristika des Lichts, z.B. wie viel von einem durch die erste optische Strahlungsquelle Ti gesendetem rotem Licht auf dem für blaues Licht vorgesehenen dritten Strahlungsempfänger Rk eintrifft. Dieser Zusammenhang wird durch den Koeffizienten $t_{ki}$ bestimmt.

Ein weiterer Zusammenhang lässt sich zwischen der von den Strahlungsempfängern Ri,Rj,Rk abgegebenen Stromstärke und der empfangenen optischen Leistung beschreiben:

$$i_{Rx} = Ep_{Rx}$$

Die Gleichung beschreibt einen Zusammenhang zwischen der von den Strahlungsempfängern Ri,Rj,Rk abgegebenen Stromstärke und der empfangenen optischen Leistung durch Multiplikation der empfangenen optischen Leistung mit einer Empfindlichkeitsmatrix $E$. Die Empfindlichkeitsmatrix $E$ beschreibt die Empfindlichkeit einer der farbselektiven Strahlungsempfänger Ri,Rj,Rk (Fotorezeptoren) beim Empfang einer der Elementarfarben.

Typischerweise, jedoch nicht zwingend, werden genauso viele Strahlungsempfänger Ri,Rj,Rk wie Elementarfarben-Leuchtdioden, also optische Strahlungsquellen Ti,Tj,Tk benutzt. Mit einer Zuordnung des Indizes i zu »rot«, j zu »grün« und k zu »blau« ist das Element $e_{ii}$ der Matrix $E$ beispielsweise die Empfindlichkeit des roten Fotorezeptors bei Empfang des von der roten LED ausgesendeten Lichtes. Die Empfindlichkeitsmatrix $E$ berücksichtigt also die spektrale Effizienz eines jeweiligen auf eine Elementarfarbe ansprechenden Strahlungsempfängers Ri,Rj,Rk und zusätzlich eines eventuell vorgesehenen Farbfilters sowie, durch eine entsprechende Linearkombination der Koeffizienten der Empfindlichkeitsmatrix $E$, ein »Übersprechen« zwischen den auf eine jeweilige Elementarfarbe ansprechenden Strahlungsempfängern Ri,Rj,Rk. Die Koeffizienten der Empfindlichkeitsmatrix $E$ werden wie folgt dargestellt:

$$E := \begin{pmatrix} e_{ii} & e_{ij} & e_{ik} \\ e_{ji} & e_{jj} & e_{jk} \\ e_{ki} & e_{kj} & e_{kk} \end{pmatrix}$$

Ein weiterer Zusammenhang lässt sich zwischen jeweiligen digitalen Signalintensitätswert, zusammengefasst in einem Signalintensitätsvektor und den von den Strahlungsempfängern Ri,Rj,Rk jeweils abgegebenen Stromstärke beschreiben:

$$s_{Rx}^{(b)} = \left\{ \boldsymbol{Bi}_{Rx} \right\}_{A/D}$$

Hier und im Folgenden kennzeichnet der Operand {.}$_{A/D}$ einen durch einen Analog-Digitalwandler konvertierten Wert des in der geschweiften Klammer stehenden Arguments.

Eine empfängerseitige Konvertierungsmatrix $\boldsymbol{B}$ ist eine Diagonalmatrix und beschreibt den Konvertierungsfaktor zwischen dem analogen und dem digitalen Empfängersignal.

Schließlich lässt sich analog zum obigen Zusammenhang auch auf Seiten des Senders TX ein Zusammenhang zwischen der den jeweiligen Strahlungsquellen Ti,Tj,Tk jeweils zugeführten Stromstärke und dem jeweiligen digitalen Signalintensitätswert, zusammengefasst in einem Signalintensitätsvektor herstellen:

$$\boldsymbol{i}_{Tx} = \boldsymbol{A} \left\{ s_{(Tx)}^{(b)} \right\}_{D/A}$$

Hier und im Folgenden kennzeichnet der Operand {.}$_{D/A}$ einen durch einen Digital-Analogwandler konvertierten Wert des in der geschweiften Klammer stehenden Arguments.

Eine senderseitige Konvertierungsmatrix $\boldsymbol{A}$ ist ebenfalls eine Diagonalmatrix und beschreibt den Zusammenhang zwischen dem jeweiligen digitalen Signalintensitätswert und dem den jeweiligen Strahlungsquellen Ti,Tj,Tk jeweils zugeführten Treiberwechselstrom. Die Koeffizienten der senderseitigen Konvertierungsmatrix $\boldsymbol{A}$ werden wie folgt dargestellt:

$$\boldsymbol{A} := \begin{pmatrix} \alpha_i & 0 & 0 \\ 0 & \alpha_j & 0 \\ 0 & 0 & \alpha_k \end{pmatrix}$$

Die folgende Gleichung stellt eine Beziehung zwischen dem empfängerseitigen und dem senderseitigen Signalintensitätsvektor her:

$$s_{Rx}^{(b)} = \left\{ \boldsymbol{BETf} \left( \boldsymbol{A} \left\{ s_{Tx}^{(b)} \right\}_{D/A} \right) \right\}_{A/D}.$$

Ändert sich im Laufe der Zeit die Quanteneffizienz einer der optischen Strahlungsquellen Ti,Tj,Tk, mit anderen Worten das Verhältnis des jeweils zugeführten Treiberstrom in optische Leistung, geht dies mit einer Änderung der Funktion f in eine modifizierte Funktion f' einher. Damit ändern sich bei gleichen Sendersignalen die empfangenen Signale und somit nach obiger Gleichung auch der empfängerseitige Signalintensitätsvektor $s_{Rx}^{(b)}$. Stehen dessen Werte auf Seiten des Senders TX zur Verfügung kann eine Beziehung gemäß

$$\boldsymbol{f'} \left( \boldsymbol{As}_{Tx} \right) = \boldsymbol{f} \left( \boldsymbol{As}_{Tx} \right) \boldsymbol{f} \left( \boldsymbol{As}_{Tx} \right)^{T} \left\{ s_{Rx} \boldsymbol{f} \left( \boldsymbol{As}_{Tx} \right)^{T} \right\}^{-1} s_{Rx}'$$

hergeleitet werden. Der Signalintensitätsvektor $s_{Rx}'$ entspricht einem modifizierten empfängerseitigen Signalintensitätsvektor, wobei sich der modifizierte empfängerseitige Signalintensitätsvektor $\boldsymbol{s}_{Rx}'$ gegenüber dem Signalintensitätsvektor $\boldsymbol{s}_{Rx}$ aufgrund der oben besagten Änderung in der Quanteneffizienz ergeben hat.

Bei der obigen Beziehung wurde aufgrund einer unterstellten ausreichend hohe Bitlänge in der binären Repräsentation der in der Gleichung aufgestellten Größen eine Identität der Größen mit deren entsprechenden Binärwerten unterstellt, so dass der für einen Binärwert stehende hochgestellte Kenner (b) in obiger Beziehung nicht mehr vorhanden ist.

Weiterhin sind aufgrund einer unterstellten ausreichend hohen Quantisierungstiefe der empfängerseitigen Analog-Digitalwandler sowie der senderseitigen Digital-Analogwandler auch die Operanden

$\{.\}_{A/D}$ und $\{.\}_{D/A}$

aus obiger Gleichung eliminiert. Mit anderen Worten wird eine Identität des konvertierten Werts mit dem zu konvertierenden Wert angenommen.

Änderungen in der Quanteneffizienz ergeben sich beispielsweise durch Temperaturänderung oder aufgrund eines Alterungsprozesses in den sendenden Strahlungsquellen. Eine Änderung der Quanteneffizienz bedeutet für die jeweilige optische Strahlungsquelle Ti,Tj,Tk dass bei gleichem Strom weniger oder mehr optische Leistung abgestrahlt wird.

Mit den Mitteln der Erfindung soll zur Stabilisierung des Farbkodierungsverfahrens eine senderseitige Kompensation von Änderungen in der optischen Leistung der einzelnen Elementarfarben-Strahlungsquellen erzielt werden. Dazu wird zunächst der gesendete Signalintensitätsvektor mit einer Kompensationsfunktion $c$ transformiert, so dass sich folgende Beziehung ergibt:

$$s_{Rx}^{(b)} = \left\{ BETf' \left( A \left\{ c \left( s_{Tx}^{(b)} \right) \right\}_{D/A} \right) \right\}$$

obige Gleichung kann in eine verkürzte Form gebracht werden:

$$f\left( A\bar{s}_{Tx} \right) = f' \left( Ac[\bar{s}_{Tx}] \right)$$

Die obige Beziehung stellt ein komplexes inverses Problem auf, für die es zumindest zwei praktische Fälle gibt, für die die Beziehung in geschlossener Form aufgelöst werden kann

In beiden Fällen gilt

$$c\left( s_{Tx} \right) = C s_{Tx}$$

wobei $C$ eine Diagonalmatrix ist, welche im Folgenden auch als Kompensationsmatrix $C$ bezeichnet wird.

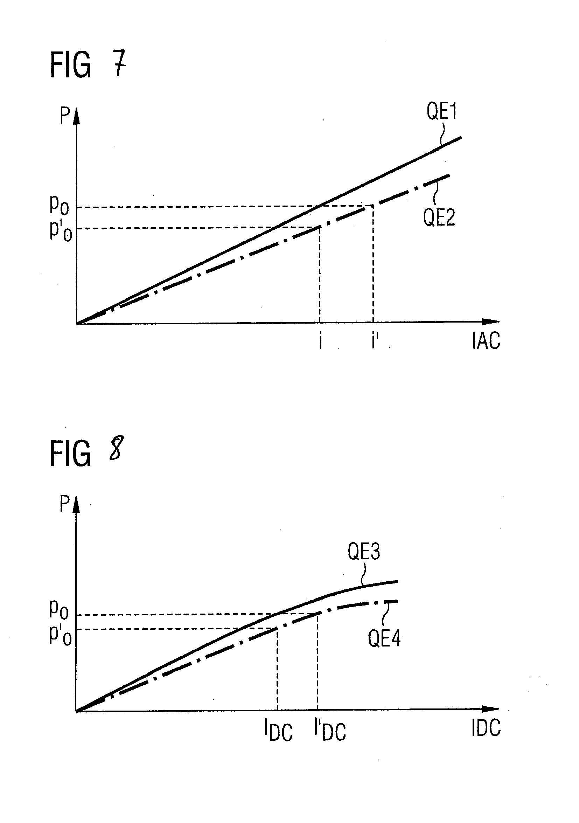

Für einen ersten Fall, in dem lediglich die Abmessungen der charakteristischen Kurve gemäß der in Figur 7 dargestellten Funktion der optischen Strahlungsleistung einer Strahlungsquelle in Abhängigkeit vom zugeführten Treiberwechselstrom, nicht jedoch deren Kurvenform (Shape) einer Veränderung unterliegt, kann die charakteristische Vektorfunktion formuliert werden zu:

$$f(i_{Tx}) = \tilde{Q} g(i_{Tx})$$

wobei $\tilde{Q}$ eine Diagonalmatrix ist, die als allgemeine Quanteneffizienzmatrix zu verstehen ist, welche Änderungen in der Quanteneffizienz einer jeweiligen Strahlungsquelle Ti,Tj,Tk abbildet. Im Gegensatz hierzu ist eine so definierte Vektorfunktion $g$ unabhängig von der Quanteneffizienz einer jeweiligen Strahlungsquelle Ti,Tj,Tk. Kompensationsfaktoren für diesen Fall können gemäß folgender Beziehung bestimmt werden:

$$C = A^{-1} g^{-1} \left( g\left( A s_{Tx} \right) g\left( A s_{Tx} \right)^{T} \left\{ s_{Rx}' g\left( A s_{Tx} \right)^{T} \right\}^{-1} s_{Rx} \right) \left\{ s_{Tx} s_{Tx}^{T} \right\}^{-1}$$

Es ist zu beachten, dass die Ermittlung von Kompensationsfaktoren innerhalb der Kompensationsmatrix $C$ auf Basis der obigen Beziehung auf einer Anzahl von senderseitig ermittelbaren Faktoren sowie auf einer einzigen empfängerseitigen Größe, nämlich dem empfängerseitigen Signalintensitätsvektor $s_{Rx}$ basiert. Weitere senderseitige Faktoren umfassen die senderseitige Konvertierungsmatrix $A$ sowie die von der Quanteneffizienz einer jeweiligen Strahlungsquelle Ti,Tj,Tk unabhängig Vektorfunktion $g$.

Mit anderen Worten wird mit Wissen des vom Empfänger an den Sender gesandten empfängerseitigen Signalintensitätsvektors $s_{Rx}$ eine Kompensation der senderseitigen Strahlungsquelle und damit eine Stabilisierung der Farbkodierung erreicht.

Für einen zweiten rein linearen Fall, für den $g(i)$ linear abhängig von $i$ ist, also:

$$g(i) \sim i$$

vereinfacht sich die Bestimmung der Kompensationsmatrix $C$ zu:

$$C = s_{Tx} s_{Tx}^T \left\{ s'_{Rx} s_{Tx}^T \right\}^{-1} s_{Rx} s_{Tx}^T \left\{ s_{Tx} s_{Tx}^T \right\}^{-1}$$

Es ist zu beachten, dass die Ermittlung von Kompensationsfaktoren innerhalb der Kompensationsmatrix $C$ auf Basis der obigen Beziehung auf einem senderseitig ermittelbaren Faktor $s_{Tx}$ sowie auf einer einzigen empfängerseitigen Größe, nämlich dem empfängerseitigen Signalintensitätsvektor $s_{Rx}$ basiert.

Auch in diesem zweiten Fall wird mit Wissen des vom Empfänger an den Sender gesandten empfängerseitigen Signalintensitätsvektors $s_{Rx}$ eine Kompensation der senderseitigen Strahlungsquelle und damit eine Stabilisierung der Farbkodierung erreicht.

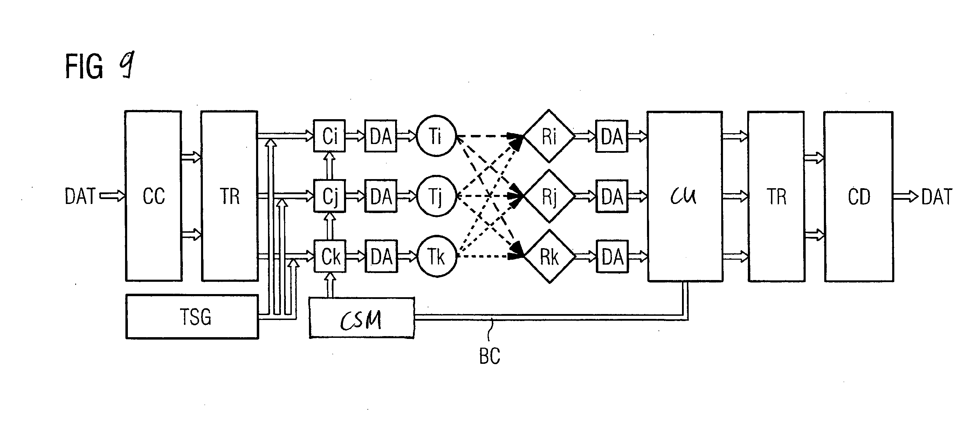

Zur Korrektur der Sendeparameter wird das nachfolgende Verfahren gemäß der Figuren 2 und 9 vorgeschlagen.

Figur 2 zeigt zunächst ein Prinzipbild zur schematischen Darstellung der erfindungsgemäßen Regelschleife. Dabei sind erneut die aus Figur 1 bekannten Funktionseinheiten Sender TX und Empfänger RX dargestellt.

Der Sender TX bildet und übermittelt mindestens eine Kalibrierungsnachricht CAL an den Empfänger RX. Die Kalibrierungsnachricht CAL umfasst mindestens eine Zeitsequenz, innerhalb der mindestens eine einer Elementarfarbe zugeordnete optische Strahlungsquelle mit einem Wert einer zu sendenden optischen Leistung eingestellt wird.

Die Kalibrierungsnachricht CAL wird im Empfänger RX empfangen. Ein jeweiliger Wert einer am jeweiligen optischen Strahlungsempfänger empfangenen optischen Leistung wird vom Empfänger RX im Rahmen einer entsprechenden Nachricht über eine empfängerseitige Sendeschnittstelle TI an den Sender TX über einen Rückkanal BC gesendet. Dort wird die Nachricht über eine senderseitige Empfangsschnittstelle RI empfangen.

Im Sender TX wird der jeweilige Wert der am jeweiligen optischen Strahlungsempfänger empfangenen optischen Leistung in Beziehung gesetzt zum jeweiligen Wert der an der jeweiligen optischen Strahlungsquelle gesendeten optischen Leistung. Aufgrund der oben beschriebenen Beziehungen wird dann eine Kompensationsinformation ermittelt, wobei auf Basis der Kompensationsinformation eine Anpassung mindestens eines Sendeparameters vorgenommen wird.

Figur 9 zeigt unter anderem die aus Figur 1 bekannten Funktionskomponenten eines optischen Datenübertragungssystems, wobei die in Figur 2 gezeigte Regelschleife durch den Rückkanal BC realisiert ist.

Auf Seiten des Senders TX ist ein Kalibrierungsnachrichtengenerator TSG vorgesehen, durch welchen digitale Kalibrierungsnachrichten auf den Eingang eines jeweiligen Konverters DA einer jeweiligen optischen Strahlungsquelle Ti,Tj,Tk angelegt werden. Die daraufhin konvertierten und über die optischen Strahlungsquellen Ti,Tj,Tk gesandten Kalibrierungsnachrichten werden auf Empfängerseite RX entsprechend dekodiert. In einer Auswertungseinheit CU wird ein jeweiliger Wert einer am jeweiligen optischen Strahlungsempfänger Ri,Rj,Rk empfangenen optischen Leistung ermittelt. Anschließend werden die jeweiligen Werte in einer entsprechenden Nachricht über den Rückkanal BC an ein Farbstabilisierungsmodul CSM des Senders TX gesendet.

Im Farbstabilisierungsmodul CSM wird nun der jeweilige Wert der am jeweiligen optischen Strahlungsempfänger Ri,Rj,Rk empfangenen optischen Leistung in Beziehung gesetzt wird zum jeweiligen Wert der an der jeweiligen optischen Strahlungsquelle Ti,Tj,Tk gesendeten optischen Leistung. Als Ergebnis dieser Beziehung wird eine Kompensationsinformation ermittelt, wobei auf Basis der Kompensationsinformation eine Anpassung mindestens eines Sendeparameters vorgenommen wird. Dazu werden in Folge die zu sendenden digitalen Signale durch Zwischenschaltung eines jeweiligen Korrekturelements Ci,Cj,Ck mit einer jeweiligen Kompensationsinformation multipliziert, so dass die Mischfarbe des ausgesandten Lichtes mit der ursprünglichen wieder übereinstimmt. Beispielsweise wird für eine jeweilige Elementarfarbe ein jeweiliger Kompensationsfaktor ermittelt.

In Figur 3 ist eine zweidimensionale Normfarbtafel gemäß der Definition der internationalen Beleuchtungskommission CIE dargestellt. Dabei werden die drei Elementarfarben, beispielsweise rot, grün, blau auf zwei Koordinaten x, y abgebildet. Eine dritte Elementarfarbe wird für jeden Punkt der Farbtafel rechnerisch aus den beiden anderen durch die Beziehung $x + y + z = 1$ ermittelt. Damit zeigt Figur 3 eine mittels des in Figur 1 gezeigten Transformers TR vorgenommene Umrechnung (Mapping) eines zweidimensionalen xy-Werts in ein dreidimensionales Signaldatum.

Innerhalb der Normfarbtafel gemäß Figur 3 ist ein Farbzuordnung bzw. Farbmapping für ein 4-Punkt-CSK-Verfahren, auch 4 CSK genannt, dargestellt. Ein entsprechendes 4-CSK-Übertragungssystem ist in der Lage, pro übertragenes Symbol zwei Bit Daten zu übertragen. Dabei werden vier Farbpunkte 00,01,10,11 definiert, wobei ein mit einem Kreuz dargestellter Farbpunkt 01 einen Schwerpunkt der in den Eckpunkten der gezeigten Konstellation angeordneten übrigen drei Farbpunkte 00,10,11 bildet. Dieser Schwerpunkt 01 wird oftmals auch als »Centre of Gravity« bezeichnet.

Die übrigen Farbpunkte 00,10,11 definieren weitere drei Symbole, welche in dieser Reihenfolge im Wesentlichen den Elementarfarben grün, blau und rot entsprechen.

Ein am Schwerpunkt 01 dargestellter Pfeil symbolisiert ein Abdriften des Schwerpunkts 01, welches in Folge einer Änderung einer nichtlinearen bzw. gleichstrombezogenen Quanteneffizienz der Strahlungsquellen Ti,Tj,Tk aufgrund eines Gleichstromverhaltens der in den Strahlungsquellen Ti,Tj,Tk eingesetzten Leuchtdioden hervorgerufen sein kann.

Ein an den Farbpunkten 00,10,11 jeweils dargestellter Pfeil symbolisiert ein Abdriften der außermittigen Farbpunkte 00,10,11, welche in Folge einer Änderung einer linearen bzw. wechselstrombezogenen Quanteneffizienz der Strahlungsquellen Ti,Tj,Tk aufgrund eines Wechselstromverhaltens der in den Strahlungsquellen Ti,Tj,Tk eingesetzten Leuchtdioden hervorgerufen sein kann.

Da die jeweilige Lage und Anordnung der Farbpunkte in der Farbzuordnung in der erläuterten Weise für die Kodierung und Dekodierung der Symbole herangezogen wird, wird das in Figur 3 gezeigte Diagramm auch als Konstellationsdiagramm bezeichnet.

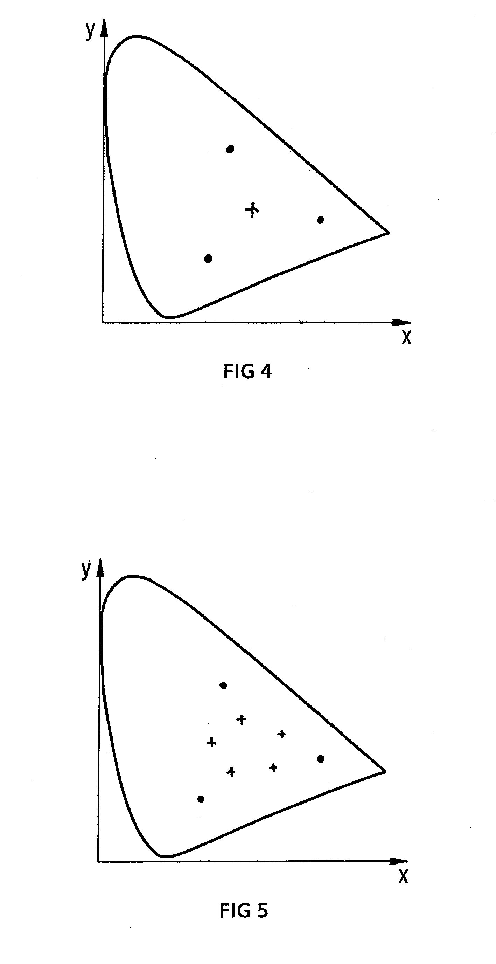

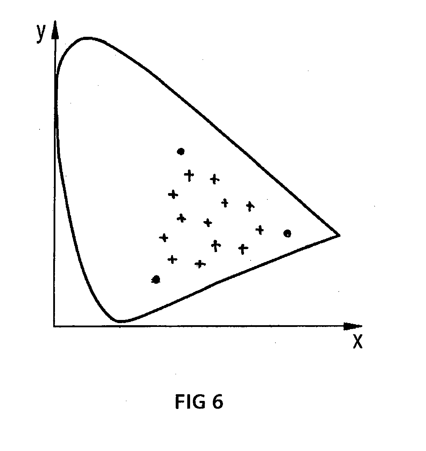

In Figur 4 ist das aus Figur 3 bekannte Konstellationsdiagramm für ein 4-Punkt-CSK-Verfahren, auch 4 CSK genannt. Das Konstellationsdiagramm ist ohne Bezugszeichen dargestellt, um eine Vergleichbarkeit mit einem Konstellationsdiagramm mit einer höherwertigen Symbolanzahl gemäß der folgenden Figuren 5 und 6 zu ermöglichen.

Die in dieser und den folgenden Figuren 5 und 6 mit Punkten dargestellten äußersten Symbole bzw. Eckpunkte bleiben in den höherwertigen Farbzuordnungen erhalten. Diese Eckpunkte des Konstellationsdiagramms entsprechen im Wesentlichen den Elementarfarben grün, blau und rot.

In Figur 5 ist ein Konstellationsdiagramm für ein 8-Punkt-CSK-Verfahren, auch 8 CSK genannt dargestellt, welche eine Kodierungstiefe von 3 Bit pro Symbol erlaubt. In dieser Konstellation ist der Schwerpunkt bzw. »Centre of Gravity« nicht in der Farbkodierung enthalten.

In Figur 6 ist ein Konstellationsdiagramm für ein 16-Punkt-CSK-Verfahren, auch 16 CSK genannt, dargestellt, welche eine Kodierungstiefe von 4 Bit pro Symbol erlaubt. In dieser Kodierungstiefe von 4 Bit pro Symbol ist der Schwerpunkt wie bei der oben erläuterten Kodierungstiefe von 2 Bit pro Symbol in der Farbkodierung enthalten.

Eine hinsichtlich einer parallelen Nutzung einer optischen Datenübertragung mit einer Innenraumbeleuchtung zu fordernde Voraussetzung für die Kompensation der Farbkodierung ist, dass durch die optischen Strahlungsquellen gesendeten Kalibrierungsnachrichten keine Änderungen in der Empfindung der Lichtfarbe und Lichtintensität für einen menschlichen Betrachter hervorrufen.

Dies bedeutet im Hinblick auf die in den obigen Figuren 4 bis 6 gezeigte Farbzuordnung, dass der Schwerpunkt jeder Sequenz von in einer oder mehreren Kalibrierungsnachrichten gesendeten Symbolen mit dem Schwerpunkt des jeweiligen Konstellationsdiagramms übereinstimmen muss. Diese Überseinstimmung wird entweder dadurch erreicht, indem lediglich ein Symbol gesendet wird, dessen Farbpunkt mit dem Schwerpunkt des Konstellationsdiagramms übereinstimmt.

Alternativ ist eine Sequenz wechselnder Symbole vorgesehen sein, deren gemittelter geometrischer Schwerpunkt mit dem Schwerpunkt des Konstellationsdiagramms übereinstimmt. Die letztgenannte zweite Alternative hat den Vorteil, dass sie auch für eine 8-CSK-Farbzuordnung gemäß Figur 5 geeignet ist, in welcher der Schwerpunkt der Konstellation in der Farbkodierung nicht enthalten ist.

In einem Ausführungsbeispiel der Erfindung ist daher vorgesehen, eine Sequenz wechselnder Symbole in einer oder mehrerer Kalibrierungsnachrichten vorzusehen, welche zyklisch die Eckpunkte eines jeweiligen Konstellationsdiagramms durchlaufen. Bei Verwendung dreier Elementarfarben blau, grün, rot bedeutet dies, dass die genannten Farben in zyklischer Reinfolge in entsprechenden Symbolen kodiert durchlaufen werden.

Für den Fall, das eine Stabilisierung einer Farbkodierung lediglich bezüglich der Wechselstromcharakteristik der Strahlungsquellen durch eine entsprechende Rekalibrierung erzielt werden soll, ist es ausreichend, eine oder wenige Kalibrierungsnachrichten zu senden, durch welche eine Abfolge von aufeinander folgenden Symbolen übertragen wird, bei der jedes einer jeweiligen Elementarfarbe entsprechende Symbol lediglich einmal gesendet wird oder auch in einer nur geringen Anzahl wiederholt wird.

Soll dagegen eine niederfrequente thermische Dynamik der jeweiligen Lichtstrahlungsquellen, mit anderen Worten, das Gleichstromverhalten, bestimmt werden, ist eine Übermittlung lediglich eines oder weniger Symbole zu kurz, um ein hierfür notwendiges thermisches Gleichgewicht zu erreichen.

Die besagte niederfrequente thermische Dynamik der Strahlungsquelle beeinflusst einerseits eine Ruhestromstabilisierung und damit die Lage des Schwerpunkts im Konstellationsdiagramm, andererseits auch die wahrnehmbare Durchschnittsfarbe in der abgestrahlten optischen Leistung der Strahlungsquellen.

Typische thermische Reaktionszeiten von in den Strahlungsquellen beispielhaft eingesetzten Leuchtdioden liegen im Mikrosekundenbereich, welcher die in einem Bereich von weniger als 100 Nanosekunden liegende zeitliche Dauer eines Symbols bei Weitem überschreitet.

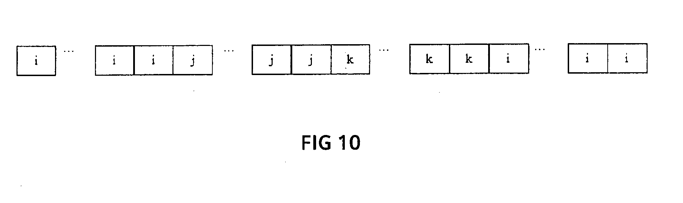

Es wird daher gemäß einer Ausführungsform der Erfindung in Vorgriff auf die Beschreibung der Figur 10 vorgeschlagen, jedes Symbol so oft zu wiederholen, bis ein thermisches Gleichgewicht in den jeweiligen Strahlungsquellen erreicht ist, um dann zum nächsten Symbol zu wechseln.

Das auf Empfängerseite empfangene Signal des Intensitätsvektors $s_{Rx}$ wird dann lediglich für die zuletzt gesandten wiederholten Symbole innerhalb dieser Sequenz relevant sein, da erst die am Schluss liegenden Symbole durch eine im thermischen Gleichgewicht befindliche jeweilige optische Strahlungsquelle gesendet worden sind. Alternativ wird ein Mittelwert über eine geeignete Anzahl von Symbolen am Ende der Sequenz gebildet.

Für typische Leuchtdioden sowie für die typische Übertragungsrate von derzeit bekannten Datenübertragungsverfahren mittels sichtbaren Lichts ist eine circa 100-fache Wiederholung jedes Symbols angemessen, bevor in zyklischer Weise zu einem dem nächsten Eckpunkt im Konstellationsdiagramm entsprechenden Symbol gewechselt wird.

Der Empfänger RX sendet dabei den jeweiligen Wert der am jeweiligen optischen Strahlungsempfänger empfangenen optischen Leistung in Form eines empfangenen Intensitätsvektors $s_{Rx}$ an den Sender zurück. Alternativ wird ein Intensitätsvektors mit jeweiligen für alle drei Eckpunkte des Konstellationsdiagramms bestimmten Mittelwert zurückgesandt.

An dieser Stelle ist anzumerken, dass die hier vorgeschlagene Verwendung der CSK-Modulation zur Farbstabilisierung nur eines vieler möglicher Implementierungsbeispiele ist. Ein anderes Beispiel ist die Verwendung der sogenannten On-Off-Keying-Modulation. Hierbei werden bspw. Während der »On«-Phase alle drei Lichtquellen so angesteuert, dass die Mischfarbe des ausgesendeten Lichts das des Farbschwerpunkts der während des Datenverkehr gesendeten CSK-Symbole entspricht. Während der »Off«-Phase wird dann beispielsweise nichts gesendet. In einer vorteilhaften Ausformung der Erfindung können nur »On«-Symbole ausgestrahlt werden, das heißt die Lichtquelle bleibt während der Aussendung von Symbolen ständig an.

Bei einer Auswahl der Symbolwiederholungsrate ist auch zu berücksichtigen, dass die für einen zyklischen Durchlauf aller Eckpunkte des Konstellationsdiagramms benötigte Gesamtzeit kürzer sein soll als die Zeit, welche für ein menschliches Auge als Flackern wahrgenommen wird. Wenn beispielsweise eine maximal zulässige Periode von 5 Millisekunden als Grenze für eine flackerfreie Wahrnehmung vorgesehen ist, darf die Symbölsequenz jedes der drei Eckpunkte maximal 1,66 Millisekunden betragen.

Da sich Änderungen in der Quanteneffizienz der Strahlungsquellen in längeren Zeitmaßstäben von Sekunden, Minuten oder sogar Stunden ergeben, ist eine Rückgabe eines jeweiligen Intensitätsvektors einer am jeweiligen optischen Strahlungsempfänger empfangenen optischen Leistung an den Sender nach jeder Symbolsequenz nicht unbedingt notwendig. Stattdessen kann ein Zeitgeber im Empfänger gesetzt werden, welcher bestimmt, wie oft die besagten Intensitätsvektoren zu senden sind.

Figur 7 zeigt eine Funktion der optischen Strahlungsleistung P einer einer jeweiligen Strahlungsquelle Ti,Tj,Tk zugeordneten Leuchtdiode in Abhängigkeit von einem zugeführten Treiberwechselstrom IAC. Diese Funktion wird auch als wechselstromabhängige Quanteneffizienz der Leuchtdiode bezeichnet. Das Wechselstromverhalten der Quanteneffizienz ist gemäß Figur 7 linear oder quasi-linear.

Die in Figur 7 gezeigte durchgezogene Linie entspricht dabei einer ursprünglichen Quanteneffizienz QE1, welche sich im Verlauf eines Betriebs der Strahlungsquelle verändert, hier z.B. vermindert, dargestellt durch die darunterliegende strichpunktierte Linie gemäß einer geänderten Quanteneffizienz QE2.

Diese geänderte Quanteneffizienz QE2 hat zur Folge, dass für einen gegebenen Treiberwechselstrom i die ursprüngliche optische Leistung $p_0$ auf einen geringeren Wert $p_0$' sinkt. Um im Rahmen einer Kompensation und damit Stabilisierung der Farbkodierung wieder den ursprünglichen Wert der gesendeten optischen Leistung $p_0$ zu erhalten, muss der Treiberwechselstrom in einen höheren Wert i' geändert werden.

In Figur 8 ist eine Funktion einer Quanteneffizienz der Leuchtdiode in Abhängigkeit von einem zugeführten Treiberstrom IDC dargestellt. Die Quanteneffizienz wird dabei anhand eines Gleichstromverhaltens bezüglich des Treiberstroms IDC dargestellt. Das Gleichstromverhalten der Quanteneffizienz ist gemäß Figur 8 nicht linear. Gründe für diese Nichtlinearität sind vielfältiger Natur und werden beispielsweise durch eine thermische Trägheit und/oder etwaige Sättigungseffekte in der Leuchtdiode hervorgerufen.

Die erfindungsgemäße Stabilisierung der Farbkodierung mittels einer Kompensation von Sendeparametern wird gemäß einer bevorzugten Ausführungsform der Erfindung für eine Kompensation der nichtlinearen Quanteneffizienz eingesetzt. In gleicher Weise ist mit den Mitteln der Erfindung auch eine Kompensation hinsichtlich der linearen Quanteneffizienz durchführbar, ohne hierfür spezielle geänderte Maßnahmen vorzusehen.

Fig. 10 zeigt eine beispielhafte Kalibrierungsnachricht bzw. eine Serie von Kalibrierungsnachrichten mit einer zeitlichen Sequenz an wiederholten Symbolen i,j,k. Mit diesen Kalibrierungsnachrichten wird gemäß einer Ausführungsform der Erfindung mindestens eine Sequenz gesendet, innerhalb der mindestens eine einer Elementarfarbe zugeordnete optische Strahlungsquelle mit einem Wert einer zu sendenden optischen Leistung eingestellt wird.

Die einzelnen Symbole i,j,k einer jeweiligen Sequenz entsprechen dabei beispielsweise den obigen Eckpunkten im Konstellationsdiagramm. Durch eine nahtlose Aneinanderreihung einer Vielzahl, beispielsweise einhundert bis eintausend, jeweils eine zeitliche Dauer von weniger als 1 μs aufweisenden wiederholten Symbolen i,j,k innerhalb einer Sequenz wird dabei eine zeitlich längere Vollbeleuchtung der optischen Strahlungsquellen erreicht, durch welche eine Herstellung eines thermischen Gleichgewichts und damit zur Stabilisierung des Schwerpunkts im Konstellationsdiagramm erzielt wird. In der Zeichnung sind dabei nur die jeweils ersten und letzten Symbole i,j,k einer jeweiligen Frequenz dargestellt, die ausgelassenen Symbole sind durch jeweilige Punkte versinnbildlicht. Nach einer Sequenz von einhundert bis eintausend Symbolen i einer ersten Elementarfarbe entsprechend einem ersten Eckpunkt im Konstellationsdiagramm folgt eine Sequenz von einhundert bis eintausend Symbolen j einer zweiten Elementarfarbe entsprechend einem zweiten Eckpunkt im Konstellationsdiagramm. Anschließend folgt eine Sequenz von einhundert bis eintausend Symbolen k einer dritten Elementarfarbe entsprechend einem dritten Eckpunkt im Konstellationsdiagramm, um dann wieder mit einer Sequenz von einhundert bis eintausend Symbolen i einer ersten Elementarfarbe fortzufahren.

Für derartige Kalibrierungsnachrichten kommen gemäß einer Ausführungsform der Erfindung insbesondere sogenannte »Visibility Frames« zum Einsatz. Gemäß dem noch in der Entstehung befindlichen Standard 802.15.7 kann Licht durch optische Strahlungsquellen abgestrahlt werden, welche selbst nicht notwendigerweise für eine Datenübertragung eingesetzt werden. Dies folgt dem Ziel, Funktionen zu implementieren, welche nicht primär einer Datenübertragung dienen. Derartige Funktionen umfassen beispielsweise optisch wahrnehmbare Signalisierung von Warnungen.

Für diese Funktionen sind Pakete bzw. Rahmen (»Frames«) vorgesehen, welche zwar einen MAC Datenkopfeintrag bzw. »Header« beinhalten, aber keine eigentlichen für eine Übertragung vorgesehenen Daten in einem Nutzdatenteil (»Payload«) des Rahmen enthalten. Der Nutzdatenanteil enthält stattdessen Daten, welche sichtbare Informationen erzeugen, wie zum Beispiel Farbvariationen oder Blinksignale, welche z.B. einen Kommunikationsstatus oder eine Fehlermeldung signalisieren. Die besagten Rahmen werden auch als »Color Visibility Dimming Frames« bzw. CVD-Rahmen bezeichnet. CVD-Rahmen können auch in einem Inaktivitätsmodus (Standby) zur Aufrechterhaltung einer dimmbaren Raumbeleuchtung gesendet werden.

Anhand einer nochmaligen Betrachtung der Figur 9 wird nun eine Ermittlung der Kompensationsinformationen erläutert.

Zur Ermittlung der Kompensationsinformationen auf Seiten des Senders TX werden die empfängerseitigen Intensitätsvektoren $s_{Rx}$ als Referenzsignal benötigt. Dazu wird ein jeweiliger Wert der am jeweiligen optischen Strahlungsempfänger empfangenen optischen Leistung in Form eines oder einer Vielzahl von empfängerseitig empfangenen Intensitätsvektoren $s_{Rx}$ über den optischen Rückkanal BC an den Sender TX übermittelt.

Der empfängerseitige Intensitätsvektor wird auf Empfängerseite als Referenzintensitätsvektor $s_{Rx,0}$ gespeichert. Aufeinander folgende Messungen der empfangenen Signalintensität für eine unveränderte Kalibrierungsnachricht rufen zeitabhängige Intensitätsvektoren $s_{Rx,s}$ für die jeweils vermerkte Zeit $t_s$ hervor. Falls eine Komponente im Intensitätsvektor $s_{Rx,s}$ signifikante Unterschiede zu der entsprechenden Komponente des Referenzintensitätsvektor $s_{Rx,0}$ aufweist, werden die für eine optische Datenübertragung zu sendenden Signale in den jeweiligen Korrekturelementen Ci, Cj, Ck mit den Diagonalelementen der Kompensationsmatrix $C$ korrigiert, insbesondere multipliziert.

Eine Entscheidung, wann eine solche Korrektur erforderlich ist, kann auf Grund eines Wertes der Diagonalelemente der Kompensationsmatrix $C$ selbst getroffen werden. Weichen diese Diagonalelemente signifikant von einem Wert von 1 ab, ist eine Korrektur der gegenwärtigen Kompensationsfaktoren erforderlich. Ob eine Abweichung als signifikant zu beurteilen ist, kann entweder anhand eines vorgegebenen Wertebereichs wie zum Beispiel einer Abweichung von 5 % entschieden werden, oder die Entscheidung kann auf Grund der Daten selbst ausgelöst werden. Ein Beispiel hierfür ist die Heranziehung eines Histogramms der Diagonalelemente der Kompensationsmatrix $C$. Ein signifikanter Unterschied kann dabei als Überschreitung eines vordefinierten Konfidenzintervalls beurteilt werden, zum Beispiel ein 95 % -Konfidenzintervall.

Um eine Beschädigung oder Sättigung der Leuchtdioden oder eine Sättigung der Analog-Digital- bzw. Digital-Analog-Wandler auf einer Bitebene zu vermeiden, kann ein a-priori Maximumpegel für die drei Werte des Intensitätsvektors $s_{Tx}^{(b)}$ sowie dessen korrigierten Wert $s_{Tx}$ eingeführt werden.

Änderungen, welche alle Elementarfarben in gleicher Weise betreffen, wie zum Beispiel Änderungen der Länge der optischen Übertragungstrecke TRM, können durch einen Vergleich aller Diagonalelemente der Kompensationsmatrix $C$ identifiziert werden. Wenn alle Komponenten dieser Matrix $C$ eine gleiche relative Änderung erfahren, ist eine Kompensation nicht erforderlich.

Für den Fall, das neben Diagonalelemente der Matrix $C$ signifikant von einem Wert von Null abweichen, kann hieraus eine Beeinträchtigung der Übertragungsstrecke aus anderen Gründen als bisher erläutert angenommen werden. Ein Beispiel für eine solche Beeinträchtigung ist die Blockierung lediglich einer optischen Strahlungsquelle gegen ein Übersprechen. Dies bedeutet beispielhaft, dass der optische Strahlungsempfänger Ri zwar von der Strahlungsquelle Ti gesendete optische Strahlung empfängt, jedoch keine von den übrigen Strahlungsquellen Tj, Tk gesendete optische Strahlung. In einem solchen Fall wird der Treiberstrom der betroffenen optischen Strahlungsquellen Tj, Tk nicht kompensiert. Stattdessen kann diese Information zum Beispiel für eine durch den Sender TX generierte Warnmeldung verwendet werden. Eine andere Option ist eine Verwendung eines überarbeiteten Referenzintensitätsvektors $s_{Rx,0}$ und eine weitere Verwendung dieses überarbeiteten Referenzintensitätsvektors $s_{Rx,0}$ für die weitere Kompensation.

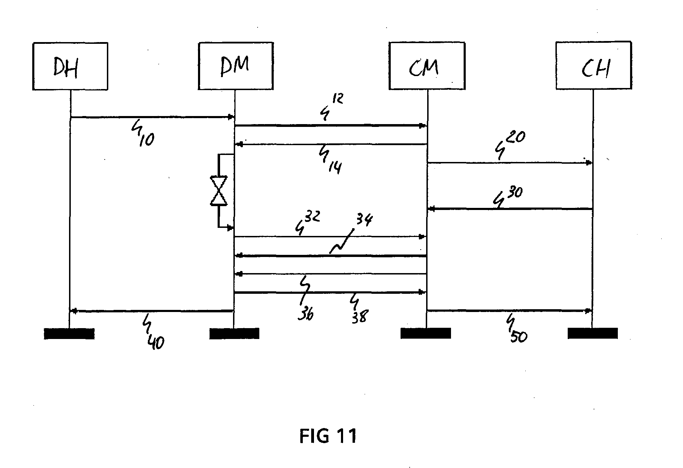

Im Folgenden wird anhand der Figur 11 eine Zuordnung bzw. Assoziation eines allgemeinen Netzknotens zu einem Koordinator erläutert. Bei einem solchen Nachrichtenaustausch wird eine überarbeitete Nachrichtenstruktur auf Basis eines Ausführungsbeispiels der Erfindung erläutert.

Ein Wechsel in der Terminologie der in den vorausgegangenen Ausführungen als Sender TX bezeichneten und weitestgehend mit dem im Folgenden als Koordinator beschriebenen Funktionskomponente ist einer allgemeinen Beschreibung geschuldet, bei der der Koordinator mindestens Sender TX umfasst. Dies gilt in analoger Weise für den Netzknoten, welcher mindestens einen Empfänger RX umfasst.

Figur 11 zeigt eine Nachrichtensequenz für die erwähnte Zuordnung eines Netzknotens, auch als Device bzw. Network Device bezeichnet mit einem Koordinator. Funktionskomponenten des Koordinators sind dabei in der rechten Hälfte von Figur angeordnet. Diese Funktionskomponenten umfassen eine MAC-schichtseitige Komponente CM des Koordinators, in der Fachwelt auch als »Coordinator MLME« bekannt, und eine am äußersten rechten Rand dargestellte höhere Schicht des Koordinators CH. Die höhere Schicht des Koordinators CH wird in der Fachwelt auch als »Coordinator Next Higher Layer« bezeichnet.

In der linken Seite der Figur 11 sind entsprechend zwei Schichten des Netzknotens dargestellt, im Einzelnen eine MAC-Schicht des Netzknotens DM, welche in der Fachwelt auch als »Device MLME« bezeichnet wird sowie eine höhere Schicht des Netzknotens DH am äußersten linken Rand. Die höhere Schicht des Netzknotens DH wird in der Fachwelt auch als »Device Next Higher Layer« bezeichnet.

Sobald ein Netzknoten einem durch einen Koordinator administriertes Netzwerk beitritt, übermittelt dieser Netzknoten seine technischen Fähigkeiten bzw. »Capabilities« zur Farbstabilisierung in CSK-Verbindungen. Im Folgenden wird angenommen, dass mindestens eine Verbindung als CSK-Verbindung ausgestaltet ist. Im gegenteiligen Fall sind im Allgemeinen keine Farbstabilisierungsfunktionen im Netzwerk nötig.

Ohne Beschränkung der Allgemeinheit wird im Folgenden davon ausgegangen, dass lediglich ein Netzknoten aufgefordert wird, aktuelle Daten bezüglich einer Farbstabilisierung zu senden. Der Netzknoten sowie der Koordinator führen daraufhin den in Figur 11 dargestellten Nachrichtenaustausch durch.

Der Nachrichtenaustausch gemäß Figur 11 ist unter Beteiligung der MAC-Schicht des Netzknotens DM sowie der MAC-Schicht des Koordinators CM dargestellt. Es ist darauf hinzuweisen, dass der Nachrichtenaustausch der im Folgenden unter Beteiligung der MAC-Schichten DM,CM dargestellten Nachrichten strenggenommen auf einer physikalischen »PHY«-Schicht stattfindet. Zum Zwecke einer einfacheren Schichtendarstellung wird auf eine darstellung der physikalischen »PHY«-Schicht verzichtet.

Zu Beginn dieses Ablaufs wird von der höheren Schicht des Netzknotens DH eine Zuordnungsanforderung 10 an die MAC-Schicht des Netzknotens DM gesendet. Die Zuordnungsanforderung 10 wird gemäß den Konventionen des noch in der Entstehung befindlichen Standard 802.15.7 auch mit »MLME-ASSOCIATE.request« bezeichnet.

Durch das Senden der Zuordnungsanforderung 10 fordert der Netzknoten eine Zuordnung an und sendet mit der Zuordnungsanforderung 10 seine technischen Fähigkeiten bzw. »Capabilities« für eine empfängerseitige Durchführung einer CSK-Farbstabilisierung.

Auf den Erhalt der der Zuordnungsanforderung 10 sendet die MAC-Schicht des Netzknotens DM eine Zuordnungsanforderung 12 an die MAC-Schicht des Koordinators CM. Die Zuordnungsanforderung 12 wird konventionsgemäß auch mit »Association request« bezeichnet.

Die MAC-Schicht des Koordinators CM bestätigt die Zuordnungsanforderung 12 mit einer Bestätigung 14. Die Bestätigung 14 wird konventionsgemäß auch mit »Acknowledgment« bezeichnet. Im Folgenden wird teilweise unausgesprochen davon ausgegangen, dass eine Anforderungsnachricht grundsätzlich durch eine Bestätigungsnachricht von der Gegenseite quittiert wird.

Nach Erhalt der Zuordnungsanforderungen 10, 12 wird von der MAC-Schicht des Koordinators CM eine Zuordnungsanfrage 20, konventionsgemäß auch mit »MLME-ASSOCIATE.indication« bezeichnet, an die höhere Schicht des Koordinators CH gesendet. Dort wird eine Entscheidung getroffen, ob und wo eine Farbstabilisierung aufgerufen wird. Für den Fall, dass die aufzubauende Verbindung eine Duplex-CSK-Verbindung ist, steht es dem Koordinator frei, eine Farbstabilisierung des Netzknotens zu unterstützen. Wie bereits erwähnt, wird in dieser Beschreibung lediglich der allgemeine Fall erläutert, bei dem die Farbstabilisierung durch den Koordinator durchgeführt wird. Alle anderen möglichen Fälle können mit Wissen des jeweiligen Fachmanns aus der speziellen Beschreibung dieses Anwendungsfalls abgeleitet werden.

Nachdem die Entscheidung getroffen wurde, ob und wo eine Farbstabilisierung aufgerufen werden soll, wird von der höheren Schicht des Koordinators CH an die MAC-Schicht des Koordinators CM eine Zuordnungsantwort 30 gesendet, bei der ein entsprechendes Feld »Capability-Negotiation-Response« entsprechend einer im weiteren zu beschreibenden Weise belegt ist. Die Zuordnungsantwort 30 wird konventionsgemäß auch mit »MLME-ASSOCIATE.response« bezeichnet.

Die Information in diesem »Capability-Negotiation-Response« Feld wird in Folge durch die MAC-Schichten des Koordinators CM sowie des Netzknotens DM in entsprechende MAC-Nachrichten, 36, 38 umgesetzt, welche im Folgenden erläutert werden. Die ebenfalls in der Zeichnung dargestellten Nachrichten 32,34 sind Platzhalter für andere Nachrichten, welche in der Zwischenzeit durchgeführte werden und für die gezeigte Assoziation ohne Belang deshalb hier nicht weiter beschrieben sind.

Die MAC-Schicht des Koordinators CM sendet an die MAC-Schicht des Netzknotens DM eine Zuordnungsantwort 36, welche durch die MAC-Schicht des Netzknotens DM mit einer Bestätigung 38 bestätigt wird. Die Zuordnungsantwort 36 wird konventionsgemäß auch mit »Association response«, die Bestätigung 38 auch mit »Acknowledgment« bezeichnet.

Von der MAC-Schicht des Netzknotens DM wird eine durch die Zuordnungsantwort 36 bekundete Zuordnung auf die durch die Bestätigung 14 bestätigte Zuordnungsanforderung 12 innerhalb einer einstellbaren Zeitraums erwartet, welcher durch einen Zeitgeber überwacht wird. Dieser Zeitraum wird auch als »mac-ResponseWaitTime« bezeichnet und ist in der Zeichnung durch zwei in ihren Spitzen aneinander angrenzende Dreiecke dargestellt.

Nach einer kompletten Übertragung der erwähnten Nachrichten 36 und 38 sendet die höhere Schicht des Netzknotens DM eine Zuordnungsbestätigung 40 an die höhere Schicht des Netzknotens DH für eine weitere Durchführung des Farbstabilisierungsverfahrens. Die Zuordnungsbestätigung 40 wird konventionsgemäß auch mit »MLME-ASSOCIATE.confirm« bezeichnet.

In gleicher Weise wird die Zuordnung mit Hilfe einer Statusanzeige 50 von der MAC-Schicht des Koordinators CM an die höhere Schicht des Koordinators CH gemeldet. Die Statusanzeige 50 wird konventionsgemäß auch mit »MLME-COMM-STATUS.indication« bezeichnet.

Nach Abschluss dieser Zuordnung sendet der Koordinator nunmehr Kalibrierungsnachrichten in Form von »Visibility Frames« an den Netzknoten und erhält vom Netzknoten einen jeweiligen Wert einer am jeweiligen optischen Strahlungsempfänger empfangenen optischen Leistung in Form des Signalintensitätsvektors $s_{Rx}$.

Zur Implementierung des erfindungsgemäßen Verfahrens hinsichtlich des Protokolls ausgetauschter Steuernachrichten bei einer Assoziation von Einheiten zur Verhandlung von technischen Möglichkeiten zur Farbkompensation wird eine Überarbeitung der Nachrichtenstruktur gemäß dem Protokoll des noch in der Entstehung befindlichen Standard 802.15.7 vorgeschlagen. An dieser Stelle sei noch einmal betont, dass die erfindungsgemäße Lösung einer ausschließlichen Übermittlung von Werten einer am jeweiligen optischen Strahlungsempfänger empfangenen optischen Leistung und der Verzicht auf eine weitere empfängerseitige Aufbereitung der Werte nur geringfügige Änderungen im Protokoll erfordert.

Die Semantik der Zuordnungsanforderung 10 ist im Folgenden dargestellt:

```
MLME-ASSOCIATE.request    (
                          LogicalChannel, CoordAddrMode, CoordWPANId, CoordAddress,
                          CapabilityInformation, SecurityLevel, KeyIdMode, KeySource,
                          KeyIndex
                          )
```

Gemäß einer Ausführungsform der Erfindung ist in der Zuordnungsanforderung 10 eine Überarbeitung des Parameters »CapabilityInformation« vorgenommen, welche weiter unten erläutert wird. Der Parameter CapabilityInformation« spezifiziert die technischen Fähigkeiten bzw. »Capabilities« des zuzuordnenden Netzelements und besitzt den Datentyp »Bitmap«, welcher ein Datum mit variabler Länge und Inhalt aufnehmen kann.

Die Semantik der Zuordnungsanzeige 20 ist im Folgenden dargestellt:

```
MLME-ASSOCIATE.indication    (
                             DeviceAddress, CapabilityInformation, SecurityLevel, KeyIdMode, KeySource,
                             KeyIndex
                             )
```

Gemäß einer Ausführungsform der Erfindung ist auch in der Zuordnungsanzeige 20 eine Überarbeitung des Parameters »CapabilityInformation« vorgenommen, welche weiter unten erläutert wird.

Die Semantik der Zuordnungsantwort 30 ist im Folgenden dargestellt:

```
MLME-ASSOCIATE.response    (
                           DeviceAddress, AssocShortAddress, status, CapabilityNegotiationResponse,
                           SecurityLevel, KeyIdMode, KeySource,
                           KeyIndex
                           )
```

Gemäß einer Ausführungsform der Erfindung ist in der Zuordnungsantwort 30 eine Definition des neuen Parameters »CapabilityNegotiationResponse« vorgenommen, welche weiter unten erläutert wird. Der Parameter CapabilityNegotiationResponse« spezifiziert eine Antworte des Koordinators auf die Zuordnungsanforderung des Netzelements.

Die Semantik der Zuordnungsbestätigung 40 ist im Folgenden dargestellt:

MLME-ASSOCIATE.confirm          (

AssocShortAddress, status, CapabilityNegotiationResponse, SecurityLevel, KeyIdMode, KeySource, KeyIndex

)

Gemäß einer Ausführungsform der Erfindung ist auch in der Zuordnungsbestätigung 40 eine Definition des neuen Parameters »CapabilityNegotiationResponse« vorgenommen, welche weiter unten erläutert wird.

Im Folgenden wird eine Überarbeitung des Parameters »CapabilityInformation« erläutert. Ein zugehöriges »Capability Information Element« weist die folgende Struktur auf:

| Capability Information Field | ... |
|---|---|

In obiger Aufstellung und im Folgenden bedeutet das Kürzel »...«, dass ein entsprechender Eintrag keine Bedeutung für die Implementierung des entsprechenden Ausführungsbeispiels besitzt.

Das Capability Information Element besteht aus mehreren Feldern, von denen im Folgenden lediglich das Capability Information Field betrachtet wird. Das Capability Information Field verzeichnet dabei allgemeine technische Fähigkeiten des Netzknotens, welche beispielhaft in der folgenden Tabelle dargestellt werden:

| Layer | Bit | Function |
|---|---|---|
| ... | ... | ... |
| PHY-layer capabilities | 26 | Alternate PHY (CSK) support |
| ... | ... | ... |

Eine Überarbeitung der Parameter des Capability Information Element erfolgt hinsichtlich des Parameters Color-stabilization capability (CSK), wobei den Bits 27-28 des Capability Information Fields gemäß einer Ausführungsform der Erfindung folgende Semantik zugeordnet ist:

| Bits 27-28 | Color-stabilization scheme |
|---|---|
| 00 | No color-stabilization |
| 01 | Color stabilization information to be sent from device to coordinator upon reception of visibility frames |
| 10 | Color stabilization information to be sent from coordinator to device upon reception of visibility frames |
| 11 | Color stabilization information to be sent from device to coordinator and from coordinator to device when either receives visibility frames |

Im Einzelnen bedeutet ein Wert der Bits 27-28 von »00«, dass keine Farbstabilisierung möglich ist, ein Wert von »01«, dass eine Farbstabilisierungsinformation vom Netzknoten an den Koordinator nach Erhalt von »Visibility Frames« zu senden ist, ein Wert von »10«, dass eine Farbstabilisierungsinformation vom Koordinator an den Netzknoten nach Erhalt von »Visibility Frames« zu senden ist und ein Wert von »11«, dass eine Farbstabilisierungsinformation sowohl vom Netzknoten an den Koordinator als auch umgekehrt nach Erhalt von »Visibility Frames« zu senden ist, die entweder vom Netzknoten und/oder vom Koordinator empfangen wurden. Es ist jedoch wichtig, darauf hinzuweisen, dass die genaue Bitzuordnung frei ist. Bspw. könnte auch eine Kodierung von »11« die Bedeutung "No colorstabilization" belegen.

Im Folgenden wird eine beispielhafte Definition des neuen Parameters »CapabilityNegotiationResponse« erläutert. Ein zugehöriges »Capability-Negotiation-Response Field« weist die folgende Struktur auf:

|  | Bit | Function |
|---|---|---|
| ... | ... | ... |
| Requested PHY-layer capabilities | 1-2 | Color-stabilization scheme |
| ... | ... | ... |

Das gemäß einer Ausführungsform der Erfindung überarbeitete Feld »Color-stabilization scheme« weist die folgende Semantik auf:

| Bits | Color-stabilization scheme |
|---|---|
| 00 | No color-stabilization |
| 01 | Color stabilization information to be sent from device to coordinator upon reception of visibility frames |
| 10 | Color stabilization information to be sent from coordinator to device upon reception of visibility frames |
| 11 | Color stabilization information to be sent from device to coordinator and from coordinator to device when either receives visibility frames |

Wenn die »Capability-Negotiation Response« nur eine Funktion enthält, nämlich die der Farbstabilisierung, so sind die beiden obigen Tabellen identisch. Bezüglich der auf der MAC-Schicht ausgetauschten Nachrichten, insbesondere der Zuordnungsantwort 36 sowie weiterer auf der MAC-Schicht ausgetauschten Nachrichten, sind gemäß einer Ausführungsform der Erfindung weitere Überarbeitungen vorgenommen. Eine Aufstellung dieser »MAC Command Frames« wird im Folgenden beispielhaft gezeigt:

| Command-frame identifier | Command name | Device | |
|---|---|---|---|
| | | Tx | Rx |
| ... | ... | ... | ... |
| 0x14 | Color-stabilization-timer notification | X | X |
| 0x15 | Color-stabilization information | X | X |
| ... | ... | ... | ... |

Mithilfe einer überarbeiteten MAC-Nachricht »Color-stabilization information« wird nunmehr eine Übermittlung eines jeweiligen Werts einer am jeweiligen optischen Strahlungsempfänger empfangenen optischen Leistung in Form des Signalintensitätsvektors $s_{Rx}$ unterstützt. Diese Nachricht weist ein im Folgenden dargestelltes überarbeitetes Format auf:

| Octets | 1 | 2 | 6 |
|---|---|---|---|
| MHR fields | Command-frame identifier | Short Address | Color-stabilization information |

Zur Erklärung der Felder wird auf den noch in der Entstehung befindlichen Standard 802.15.7 verwiesen. Es ist wichtig, anzumerken, dass die Größe der Color-stabilization information auch zulässt, einen gesamten Signalvektor mit mehr als ausreichender Auflösung (16 Bits) zu übertragen.

Die Übermittlung eines jeweiligen Werts einer am jeweiligen optischen Strahlungsempfänger empfangenen optischen Leistung in Form des Signalintensitätsvektors $s_{Rx}$ erfolgt im Feld »Color-stabilization information«.

Mithilfe einer überarbeiteten MAC-Nachricht »Color-stabilization-timer notification« wird nunmehr eine Definition eines Zeitintervalls unterstützt, nach Ablauf dessen eine neue Farbstabilisierung angestoßen wird. Diese Nachricht weist ein im Folgenden dargestelltes überarbeitetes Format auf:

| Octets | 1 | 2 | 2 |
|---|---|---|---|
| MHR fields | Command-frame identifier | Short Address | Color-stabilization timer |

Zur Erklärung der Felder wird auf den noch in der Entstehung befindlichen Standard 802.15.7 verwiesen.

In Ergänzung zu der im Standard erwähnten Ausformung des Zeitintervalls sind auch noch weitere Zeitintervalle möglich. Beispielsweise kann die Zeit zwischen zwei Stabilisierungsbotschaften wie <binary1> x 10^(binary2) berechnet werden, wobei {Color-stabilization timer} = {binary1 binary2}.

Eine alternative Basis als 10 ist ebenfalls möglich. Es wird empfohlen, den Standardwert des Timers aus dem Sekunden-oder Minuten-Bereich zu wählen. Ein in der Praxis bewährter Wert liegt in einem Bereich um 10 Sekunden.

Gemäß einer Ausführungsform der Erfindung ist auch eine Überarbeitung von PIB PIB (Physical-Layer Personal-Area-Network Information Base) Attributen gemäß der folgenden beispielhaften Darstellung vorgesehen:

| Attribute | Identifier | Type | Range | Description |
|---|---|---|---|---|
| macColorStabilization | 0x5f | Binary Integer | 00-11 | The colorstabilization action entailed when receiving visibility frames |
| macColorStabilization-Timer | 0x60 | Integer | 0- 65 535 | Time between two stabilization measure-ments, i.e. $s_{Rx}$ that are send back to the corresponding CSK Tx |

Darüber hinaus sind auch alternative Größenbereiche für den Zeitgeber möglich, vgl. die Ausführungen weiter oben.

Ein weiterer Vorteil gemäß einer Ausgestaltung der Erfindung ist darin zu sehen, dass mit ein und derselben Einstellung in der Assoziationsphase sowohl eine Kompensation de gleichstrombezogenen als auch des wechselstrombezogenen Quanteneffizienz ermöglicht wird. Da der Empfänger lediglich empfangene Signale zurücksendet, braucht dieser nicht zu unterscheiden, ob diese am Ende langer, wie für die gleichstrombezogene Kompensation oder kurzer Visibility Frames, wie fpr die wechselstrombezogene Kompensation, gemessen werden.

Somit hat der Sender, indem er die Länge der CSK-Frames misst, die Flexibilität, den einen oder den anderen Modus durch die Länge der ausgesendeten Visibility Frames festzulegen. Eine weitere MAC-Signalisierung, wie sie in vorbekannten Verfahren notwendig war, ist gemäß einer Ausgestaltung der Erfindung somit in vorteilhafter Weise entbehrlich.

## Patentansprüche

1. Verfahren zur Stabilisierung einer Farbkodierung bei einer optischen Übertragung von Daten,

   - bei dem zur Übertragung der Daten zwischen einem Sender (TX) und einem Empfänger (RX) ein Farbkodierungsverfahren auf Basis einer Mehrzahl von Elementarfarben vorgesehen ist,
   - bei dem eine jeweilige Elementarfarbe durch mindestens eine jeweilige senderseitige optische Strahlungsquelle (Ti, Tj, Tk) gesendet wird und empfängerseitig von mindestens einem jeweiligen optischen Strahlungsempfänger (Ri, Rj, Rk) empfangen wird,
   - bei dem vom Sender (TX) mindestens eine Kalibrierungsnachricht (CAL) gebildet wird, die mindestens eine Kalibrierungsnachricht (CAL) umfassend mindestens eine Zeitsequenz, innerhalb der mindestens eine einer Elementarfarbe zugeordnete optische Strahlungsquelle (Ti, Tj, Tk) mit einem Wert einer zu sendenden optischen Leistung eingestellt wird,
   - bei dem die mindestens eine Kalibrierungsnachricht vom Sender (TX) gesendet wird,
   - bei dem die mindestens eine Kalibrierungsnachricht (CAL) im Empfänger (RX) empfangen wird und ein jeweiliger Wert einer am jeweiligen optischen Strahlungsempfänger (Ri, Rj, Rk) empfangenen optischen Leistung ermittelt und an den Sender (TX) gesendet wird,
   - bei dem im Sender (TX) der jeweilige Wert der am jeweiligen optischen Strahlungsempfänger (Ri, Rj, Rk) empfangenen optischen Leistung in Beziehung gesetzt wird zum jeweiligen Wert der an der jeweiligen optischen Strahlungsquelle (Ti, Tj, Tk) gesendeten optischen Leistung,
   - bei dem aufgrund der Beziehung eine Kompensationsinformation ermittelt wird, wobei auf Basis der Kompensationsinformation eine Anpassung mindestens eines Sendeparameters vorgenommen wird.

2. Verfahren nach Anspruch 1,
   **dadurch gekennzeichnet,**
   **dass** die Kalibrierungsnachricht (CAL) als CVD-Rahmen ausgebildet ist.

3. Verfahren nach einem der vorgenannten Ansprüche,

**dadurch gekennzeichnet,**

**dass** eine Mehrzahl von aufeinanderfolgenden Kalibrierungsnachrichten (CAL) jeweils eine identische Kodierung enthält, welcher einem Eckpunkt in einem Konstellationsdiagramm entspricht.

4. Verfahren nach Anspruch 3,
**dadurch gekennzeichnet,**
**dass** die am jeweiligen optischen Strahlungsempfänger (Ri, Rj, Rk) empfangene optische Leistung ermittelt wird, welche nach einer oder einer Mehrzahl von aufeinanderfolgenden Kalibrierungsnachrichten (CAL), welche vorzugsweise als sogenannte Visibility Frames ausgestaltet sind, mit jeweils identischer Kodierung empfangen wird.

5. Verfahren nach Anspruch 4,
**dadurch gekennzeichnet,**
**dass** ein Mittelwert von Werten der am jeweiligen optischen Strahlungsempfänger (Ri, Rj, Rk) empfangenen optischen Leistung ermittelt wird.

6. Verfahren nach einem der vorgenannten Ansprüche,
**gekennzeichnet durch**,
ein Assoziationsverfahren zur Zuordnung eines Netzknotens durch einen Koordinator, bei dem seitens des Koordinators Umfang und Art der Stabilisierung der Farbkodierung bestimmt wird.

7. Verfahren nach Anspruch 6,
das Assoziationsverfahren **dadurch gekennzeichnet,**
**dass** eine Zuordnungsantwort (30) vorgesehen ist, mit welcher der Netzknoten technische Fähigkeiten zur Durchführung der Stabilisierung der Farbkodierung an den Koordinator übermittelt.

8. Verfahren nach einem der Ansprüche 6 bis 7,
**dadurch gekennzeichnet,**
**dass** eine Nachricht vorgesehen ist, mit welcher eine Definition eines Zeitintervalls, nach Ablauf dessen eine erneute Stabilisierung einer Farbkodierung veranlasst wird, übermittelt wird.

9. Optisches Übertragungssystem zur optischen Übertragung von Daten zwischen einem Sender (TX) und einem Empfänger (RX), eingerichtet zur Kodierung und Übertragung der Daten unter Anwendung eines Farbkodierungsverfahren auf Basis einer Mehrzahl von Elementarfarben, mit einer jeweiligen senderseitigen optische Strahlungsquelle (Ti, Tj, Tk) zum Senden einer jeweiligen Elementarfarbe und einem jeweiligen empfängerseitigen optischen Strahlungsempfänger (Ri, Rj, Rk) zum Empfang einer jeweiligen Elementarfarbe,
**gekennzeichnet durch**,
eine im Empfänger (RX) vorgesehene Auswertungseinheit (CU) zur Ermittlung eines jeweiligen Werts einer an einem jeweiligen optischen Strahlungsempfänger (Ri, Rj, Rk) empfangenen optischen Leistung,
einen Rückkanal (BC) zur Übermittlung des **durch** die Auswertungseinheit (CU) ermittelten jeweiligen Werts ,
ein im Sender vorgesehenes Farbstabilisierungsmodul (CSM) zur Ermittlung mindestens eines Kompensationsfaktors auf Basis einer Beziehung zwischen dem jeweiligen Wert der am jeweiligen optischen Strahlungsempfänger (Ri, Rj, Rk) empfangenen optischen Leistung und einem jeweiligen Wert einer an der jeweiligen optischen Strahlungsquelle (Ti, Tj, Tk) gesendeten optischen Leistung,
ein im Sender vorgesehenes Korrekturelement (Ci, Cj, Ck) zur Ermittlung mindestens einer Kompensationsinformation auf Basis der Beziehung und Anpassung mindestens eines Sendeparameters auf Basis der Kompensationsinformation.

10. Optisches Übertragungssystem zur Durchführung eines Verfahrens gemäß einem der vorgenannten Ansprüche 1 bis 8.

## Claims

1. Method for stabilising a colour coding for optical transmission of data,

   - with which a colour coding method based on a plurality of elementary colours is provided for the transmission of the data between a transmitter (TX) and receiver (RX),
   - with which a respective elementary colour is transmitted by at least one transmitter-end optical radiation source (Ti, Tj, Tk) and is received at the receiver end by at least one respective optical radiation receiver (Ri, Rj, Rk),

- with which at least one calibration message (CAL) is formed by the transmitter (TX), the at least one calibration message (CAL) comprising at least one time sequence, within which at least one optical radiation source (Ti, Tj, Tk) allocated to an elementary colour is adjusted with a value of an optical performance which is to be sent,

- with which the at least one calibration method is sent by the transmitter (TX),

- with which the at least one calibration message (CAL) is received in the receiver (RX), and a respective value of an optical performance received at the respective optical radiation receiver (Ri, Rj, Rk) is ascertained and sent to the transmitter (TX),

- with which, in the transmitter (TX), the respective value of the optical performance received at the respective optical radiation receiver (Ri, Rj, Rk) is compared with the respective value of the optical performance sent at the respective optical radiation source (Ti, Tj, Tk),

- with which, on the basis of the relationship, a piece of compensation information is ascertained, wherein, on the basis of the compensation information, an adjustment is carried out of at least one transmission parameter.

2. Method according to claim 1,
**characterised in that**
the calibration message (CAL) is formed as a CVD frame.

3. Method according to one of the preceding claims,
**characterised in that**
a plurality of sequential calibration messages (CAL) contain in each case an identical coding, which corresponds to a corner point in a constellation diagram.

4. Method according to claim 3,
**characterised in that**
the optical performance received at the respective optical radiation receiver (Ri, Rj, Rk) is ascertained, which is received with the identical coding in each case, after one or a plurality of sequential calibration messages (CAL), which are advantageously formed as what are referred to as visibility frames.

5. Method according to claim 4,
**characterised in that**
a mean value is formed from values of the optical performance received at the respective optical radiation receiver (Ri, Rj, Rk).

6. Method according to one of the preceding claims,
**characterised by**
an association method for the allocation of a network node by a coordinator, with which the scope and type of the stabilisation of the colour coding is determined by the coordinator.

7. Method according to claim 6,
the association method, **characterised in that**
an allocation response (30) is provided, with which the network node transmits to the coordinator technical capabilities for carrying out the stabilisation of the colour coding.

8. Method according to one of claims 6 to 7,
**characterised in that**
a message is provided with which a definition of a time interval is transmitted, after the expiry of which a renewed stabilisation of a colour coding is triggered.

9. Optical transmission system for the optical transmission of data between a transmitter (TX) and a receiver (RX), established for the coding and transmission of data, making use of a colour coding method based on a plurality of elementary colours, with a respective transmitter-end optical radiation source (Ti, Tj, Tk) for the transmission of a respective elementary colour and a respective receiver-end optical radiation receiver (Ri, Rj, Rk) for the reception of a respective elementary colour, **characterised by**
an evaluation unit (CU) provided in the receiver (RX) for the determination of a respective value of an optical performance received at a respective optical radiation receiver (Ri, Rj, Rk),
a back channel (BC) for transmitting the respective value determined by the evaluation unit (CU),
a colour stabilisation module (CSM) provided in the transmitter, for the determination of at least one compensation factor on the basis of a relationship between the respective value of the optical performance received at the respective optical radiation receiver (Ri, Rj, Rk) and a respective value of an optical performance transmitted to the respective optical radiation source (Ti, Tj, Tk),

a correction element (Ci, Cj, Ck) provided in the transmitter for the determination of at least one piece of compensation information on the basis of the relationship, and the adjustment of at least one transmission parameter on the basis of the compensation information.

10. Optical transmission system for carrying out a method according to one of the preceding claims 1 to 8.

**Revendications**

1. Procédé de stabilisation d'un codage chromatique lors d'une transmission optique de données,

- dans lequel il est prévu, pour la transmission des données entre un émetteur (TX) et un récepteur (RX), un procédé de codage chromatique basé sur une multiplicité de couleurs élémentaires,
- dans lequel on émet une couleur élémentaire respective au moyen d'au moins une source de rayonnement optique respective côté émetteur (Ti, Tj, Tk) et on la reçoit au moyen d'au moins un récepteur de rayonnement optique respectif côté récepteur (Ri, Rj, Rk),
- dans lequel on forme par l'émetteur (TX) au moins un message de calibrage (CAL), ledit au moins un message de calibrage (CAL) comprenant au moins une séquence temporelle à l'intérieur de laquelle on règle au moins une source de rayonnement optique (Ti, Tj, Tk) associée à une couleur élémentaire à une valeur d'une puissance optique à émettre,
- dans lequel on émet ledit au moins un message de calibrage à partir de l'émetteur (TX),
- dans lequel on reçoit ledit au moins un message de calibrage (CAL) dans le récepteur (RX) et on détermine une valeur respective d'une puissance optique reçue par le récepteur de rayonnement optique respectif (Ri, Rj, Rk) et on l'envoie à l'émetteur (TX),
- dans lequel on met en relation, dans l'émetteur (TX), la valeur respective de la puissance optique reçue au récepteur de rayonnement optique respectif (Ri, Rj, Rk) avec la valeur respective de la puissance optique émise par la source de rayonnement optique respective (Ti, Tj, Tk),
- dans lequel on détermine, sur la base de cette relation, une information de compensation, et on opère une adaptation d'au moins un paramètre d'émission sur la base de l'information de compensation.

2. Procédé selon la revendication 1, **caractérisé en ce que** le message de calibrage (CAL) est configuré comme une trame CVD.

3. Procédé selon l'une quelconque des revendications précédentes, **caractérisé en ce qu'**une multiplicité de messages de calibrage successifs (CAL) contiennent respectivement un codage identique, qui correspond à un point d'angle d'un diagramme de constellation.

4. Procédé selon la revendication 3, **caractérisé en ce que** l'on détermine la puissance optique reçue au récepteur de rayonnement optique respectif (Ri, Rj, Rk), qui est reçue avec un codage respectivement identique après un ou une multiplicité de messages de calibrage successifs (CAL), qui sont de préférence configurés comme des trames de visibilité.

5. Procédé selon la revendication 4, **caractérisé en ce que** l'on détermine une valeur moyenne de valeurs de la puissance optique reçue au récepteur de rayonnement optique respectif (Ri, Rj, Rk).

6. Procédé selon l'une quelconque des revendications précédentes, **caractérisé par** un procédé d'association en vue de l'association d'un noeud de réseau par un coordinateur, dans lequel on définit du côté du coordinateur l'ampleur et la nature de la stabilisation du codage chromatique.

7. Procédé selon la revendication 6, comprenant le procédé d'association, **caractérisé en ce qu'**une réponse d'association (30) est prévue, avec laquelle le noeud de réseau transmet au coordinateur des capacités techniques pour l'exécution de la stabilisation du codage chromatique.

8. Procédé selon l'une des revendications 6 à 7, **caractérisé en ce qu'**un message est prévu, avec lequel on transmet une définition d'un intervalle de temps, à l'expiration duquel on provoque une nouvelle stabilisation d'un codage chromatique.

9. Système de transmission optique de données pour la transmission optique de données entre un émetteur (TX) et un récepteur (RX), conçu pour le codage et la transmission des données en appliquant un procédé de codage chromatique basé sur une multiplicité de couleurs élémentaires, avec une source de rayonnement optique respective côté émetteur (Ti, Tj, Tk) pour l'émission d'une couleur élémentaire respective et avec un récepteur de rayonnement optique respectif côté récepteur (Ri, Rj, Rk) pour la réception d'une couleur élémentaire respective,

**caractérisé par**

une unité d'exploitation (CU) prévue dans le récepteur (RX) pour la détermination d'une valeur respective d'une puissance optique reçue à un récepteur de rayonnement optique respectif (Ri, Rj, Rk),

un canal de retour (BC) pour la transmission de la valeur respective déterminée par l'unité d'exploitation (CU),

un module de stabilisation chromatique (CSM) prévu dans l'émetteur pour la détermination d'au moins un facteur de compensation sur la base d'une relation entre la valeur respective de la puissance optique reçue au récepteur de rayonnement optique respectif (Ri, Rj, Rk) et une valeur respective d'une puissance optique émise à la source de rayonnement optique respective (Ti, Tj, Tk),

un élément de correction (Ci, Cj, Ck) prévu dans l'émetteur pour la détermination d'au moins une information de compensation sur la base de la relation et l'adaptation d'au moins un paramètre d'émission sur la base de l'information de compensation.

10. Système de transmission optique pour la mise en oeuvre d'un procédé selon l'une quelconque des revendications précédentes 1 à 8.

FIG 1

FIG 2

Fig 3

FIG 4

FIG 5

FIG 6

## FIG 7

## FIG 8

FIG 9

| i |   | i | i | j |   | j | j | k |   | k | k | i |   | i | i |
|---|---|---|---|---|---|---|---|---|---|---|---|---|---|---|---|

**FIG 10**

**FIG 11**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2136484 A1
- EP 2010066907 W

**In der Beschreibung aufgeführte Nicht-Patentliteratur**

- **YOKOI et al.** Modified Text clause 6.9.2.2. *IEEE P802.15.7,* 17. Januar 2010